# EUROPÄISCHE PATENTSCHRIFT

(11) **EP 3 865 529 B1**
(45) Veröffentlichungstag und Bekanntmachung des Hinweises auf die Patenterteilung: **07.06.2023**
(21) Anmeldenummer: 20157008.2
(22) Anmeldetag: 12.02.2020
(51) Int. Cl.: C08G 63/78, B01D 53/86, B01J 6/00

(54) **VERFAHREN UND VORRICHTUNG ZUR VERARBEITUNG EINES GEMISCHES AUS REZYKLIERTEM POLYESTERMATERIAL UND EINEM POLYESTER-PREPOLYMER AUS EINEM POLYESTER-HERSTELLPROZESS**
METHOD AND DEVICE FOR PROCESSING A MIXTURE OF RECYCLED POLYESTER MATERIAL AND A POLYESTER PREPOLYMER FROM A POLYESTER PRODUCTION PROCESS
PROCÉDÉ ET DISPOSITIF DE TRAITEMENT D'UN MÉLANGE D'UNE MATIÈRE POLYESTER RECYCLÉE ET D'UN PRÉPOLYMÈRE POLYESTER PROVENANT D'UN PROCÉDÉ DE FABRICATION DE POLYESTER

(43) Veröffentlichungstag der Anmeldung: 18.08.2021
(73) Patentinhaber: Polymetrix AG, 9245 Oberbüren (CH)
(72) Erfinder: Christel, Andreas, 9524 Zuzwil (CH); Schöpf, Karl, 8758 Obstalden (CH)
(74) Vertreter: Hepp Wenger Ryffel AG

(56) Entgegenhaltungen:
- WO-A1-00/77071
- DE-A1-102004 006 861

## Beschreibung

Verfahren zur Reinigung von Prozessgasen aus einem thermischen Behandlungsprozess von Schüttgütern durch katalytische Verbrennung sind bekannt. Eine besondere Ausführungsform sieht die Reinigung von Prozessgasen vor, die im Wesentlichen im Kreislauf geführt werden und nach der katalytischen Verbrennung nur geringe Mengen an Restsauerstoff enthalten dürfen. Dies ist insbesondere dann notwendig, wenn das zu behandelnde Schüttgut sauerstoffempfindlich ist. Durch die Verbrennung organischer Substanzen reduziert sich der Sauerstoffgehalt im Prozessgas. Dementsprechend muss das Prozessgas eine ausreichende Sauerstoffmenge enthalten, um die Verbrennung zu gewährleisten, aber gleichzeitig im Prozessgas so gering gehalten werden, dass nach der Verbrennung keine übermässige Sauerstoffmenge im Prozessgas verbleibt. Dazu wird dem Prozessgas eine geregelte Sauerstoffmenge zugeführt, wobei die Regelung aufgrund einer Messung einer Gaskomponente erfolgt.

Üblicherweise wird dazu die Gaszusammensetzung am Eintritt oder Austritt des Katalysatorbettes gemessen und dementsprechend die Sauerstoffzufuhr für den Verbrennungsprozess geregelt.

Derartige Verbrennungssysteme bestehend aus einer Serie an Prozessapparaten, die zur Sicherstellung des Verbrennungsvorganges notwendig sind. Im Wesentlichen werden Apparate zur Erwärmung des Prozessgases, Apparate zum Vorlegen eines Katalysatorbettes und Apparate zur Kühlung des Prozessgases eingesetzt. Die einzelnen Apparate sind mittels Prozessgasleitungen miteinander verbunden.

Für die Messung und Regelung der Sauerstoffmenge kommen noch Messgasleitungen, Messkammern, Gassensoren, Einspeiseleitungen für sauerstoffhaltige Gase sowie Regelventile für die sauerstoffhaltigen Gase zum Einsatz. Zusätzlich werden Messgasleitungen und Messkammern zur Kalibrierung der Gassensoren benötigt.

Insgesamt ergibt sich eine teure und aufwendige Anlage, die bei der Installation erheblichen Kosten und Zeitaufwand verursacht. Weiter wird über die Vielzahl an Komponenten und die Rohrleitungen, welche diese Komponenten verbinden, ein hoher Energieverlust durch Wärmeabstrahlung verursacht. Um Wärmeverluste zu minimieren muss entsprechendes Isolationsmaterial angebracht werden, was wiederum mit hohen Material- und Installationskosten verbunden ist.

Der Betrieb derartiger Systeme muss dabei immer auf die am schwersten zu verbrennende organische Substanz im Gasgemisch ausgelegt werden. Die Eintrittstemperaturen ins Katalysatorbett müssen dafür derart hoch gewählt werden, dass eine nahezu vollständige Verbrennung der am schwersten zu verbrennenden organischen Substanz im Gasgemisch erfolgt. Insbesondere wenn hochsiedende organische Substanzen oder Substanzen mit hoher Verbrennungstemperatur im Gasgemisch vorhanden sind, muss eine entsprechend hohe Eintrittstemperatur ins Katalysatorbett erreicht werden, was grosse Wärmetauscher zum Aufheizen des Prozessgases bedingt und wiederum einen hohen Energieverbrauch und/oder weitere Prozessstufen zur Energierückgewinnung bedingt.

Wird die benötigte Temperatur zur vollständigen Verbrennung nicht erreicht, führt dies zur Verunreinigung und damit Deaktivierung des Katalysatormaterials. Als Folge einer Deaktivierung muss die Eintrittstemperatur ins Katalysatorbett weiter erhöht werden, was weitere energetische und apparative Nachteile mit sich bringt. Ist die Deaktivierung derart fortgeschritten, dass eine ausreichende Verbrennung nicht mehr gewährleistet ist, muss das Katalysatormaterial ausgetauscht werden, was mit hohen Material- und Arbeitskosten sowie einer Betriebsunterbrechung verbunden ist.

Gemäss der EP-0 722 766 A1 wird die Sauerstoffkonzentration am Austritt des Katalysators mit einem schnell ansprechenden Sensor gemessen. Gemäss der EP-0 699 471 A1 wird der KohlenmonoxidGehalt am Austritt des Katalysators gemessen. Gemäss der EP-1 100 611 A1 wird das Verhältnis brennbarer Substanzen zu Sauerstoff am Eintritt und Austritt des Katalysatorbettes gemessen.

Gemäss dem zuvor erwähnten Stand der Technik kommen als Katalysatoren edelmetallhaltige Katalysatoren zum Einsatz.

Gemäss der DE-10 2004 006 861 A1 können als Katalysatormaterial auch Metalloxide zum Einsatz kommen.

Gemäss der der CH-698 275 A2 erfolgt die Messung der Gaskomponente in einer separaten Messkammer, wobei auch die Vorteile langsam ansprechender Sensoren beschrieben sind.

Insgesamt sind die oben beschriebenen Systeme komplex sowie teuer in Herstellung, Installation und Betrieb. Während es Bestrebungen gibt, Betriebskosten durch reduzierte Verbrennungstemperaturen einzusparen, wird nicht darauf eingegangen, dass sich dadurch die Lebenszeit der katalytisch aktiven Materialien verringert. Als Schutzmassnahmen zur Verlängerung der Lebenszeit werden lediglich die Verwendung von Prozessstufen zur Abtrennung von Feststoffen sowie die Adsorption von Katalysatorgiften erwähnt.

Aus ökologischen Gründen hat das Recycling von Polyestern wie PET zunehmend an Bedeutung gewonnen. Eine Variante sieht vor, rezykliertes Polyestermaterial mit Polyester-Prepolymer-Granulaten aus einem Polyester-Herstellprozess zu vermischen, um qualitativ hochwertiges Produkt zu erhalten. Vorzugsweise wird zu diesem Zweck ein rezyklierter Polyester in einen Herstellprozess von Polyestern eingetragen.

In der WO00/77071 A1 sind zwei Möglichkeiten beschrieben, wie ein rezyklierter Polyester in einen Herstellprozess von Polyestern eingetragen werden kann.

Bei der ersten Option wird vorgereinigtes, rezykliertes Polyestermaterial extrudiert und granuliert, um daraus rezyklierte Polyestergranulate zu erhalten, die nachfolgend mit Polyester-Prepolymer-Granulaten aus einem Polyester-Herstellprozess vermischt werden und zusammen einer Behandlung mittels Festphasenpolykondensation unterzogen werden.

Bei der zweiten Option wird vorgereinigtes, rezykliertes Polyestermaterial extrudiert, um daraus eine rezyklierte Polyesterschmelze zu erhalten, die nachfolgend mit einer Polyester-Prepolymerschmelze aus einem Polyester-Herstellprozess vermischt, zusammen granuliert und einer Behandlung mittels Festphasenpolykondensation unterzogen wird.

In beiden Fällen erfolgt die Reinigung des rezyklierten Polyesters in einem oder mehreren der folgenden Schritte:
- Entfernung von Oberflächenverunreinigungen in der Festphase, zum Beispiel mittels eines Waschprozesses;
- Entfernung von Verunreinigungen durch thermische Behandlung in der Festphase, zum Beispiel durch einen Trocknungsprozess;
- Entfernung von Verunreinigungen in der Schmelzphase, zum Beispiel durch Anlegen eines Vakuums oder mittels eines Spülgases in einer Entgasungskammer;
- Entfernung von Verunreinigungen durch thermische Behandlung in der Festphase in einem Festphasenpolykondensationsschritt.

Die Entfernung von Oberflächenverunreinigungen reduziert den Gehalt an volatilen, semi-volatilen und nicht volatilen Verunreinigungen. Allerdings ist dies begrenzt auf Verunreinigungen, die an der Oberfläche vorliegen oder mit dem rezyklierten Polyester vermischt sind. Verunreinigungen innerhalb des Polyesters, zum Beispiel absorbierte Verunreinigungen oder Additive, werden nicht beeinflusst.

In der thermischen Behandlung vor der Extrusion kann ein grosser Anteil an volatilen Verunreinigungen entfernt werden. Trotzdem werden bei den üblicherweise begrenzten Prozessbedingungen nur wenig der semi-volatilen Verunreinigungen entfernt. Die Entfernung semi-volatiler Verunreinigungen in diesem Schritt liesse sich durch längere Verweilzeiten und höhere Prozesstemperaturen erhöhen. Dies hätte jedoch für die nachfolgenden Prozessschritte und die Qualität des rezyklierten Polyesters nachteilige Folgen (Verfärbung, Bildung von Spaltprodukten, ungewollte Erhöhung der Viskosität).

Bei der Extrusion werden restliche Oberflächenverunreinigungen, absorbierte Verunreinigungen und als separate Partikel vorliegende Verunreinigungen homogen mit der rezyklierten Polyesterschmelze vermischt. Gleichzeitig entstehen regenerierte Verunreinigungen. Diese regenerierten Verunreinigungen umfassen Abbauprodukte von Verunreinigungen sowie Abbauprodukte des rezyklierten Polyesters, wobei der Abbau des Polyesters häufig durch vorliegende Verunreinigungen beschleunigt (katalysiert) wird.

In der WO 00/77071 A1 wird die Möglichkeit beschrieben, eine Entgasungskammer zu verwenden. Eine ausgedehnte Verwendung solcher Vorrichtungen, um grössere Mengen semi-volatiler Verunreinigungen zu entfernen, hätte jedoch für die Qualität des rezyklierten Polyesters stark nachteilige Folgen (Verfärbung, Bildung von Spaltprodukten). Abgesehen davon wäre das Problem der Bildung von Abbauprodukten nicht gelöst.

Aus den zuvor aufgeführten Zusammenhängen wird klar, dass der Schritt der Festphasenpolykondensation am Ende eine wichtige Rolle bei der Entfernung von volatilen und semi-volatilen Verunreinigungen spielt. Dies ist auch ersichtlich aus den Tabellen 1, 3 und 4 der WO 00/77071 A1, in denen für die Festphasenpolykondensation Reinigungsraten von >27 für Toluol, 21 für Benzophenon und 264 für Chloroform angegeben werden.

Somit ist auch klar, dass Verunreinigungen aus rezykliertem Polyester in den Festphasenpolykondensationsschritt am Ende der Prozesskette eingetragen werden. Trotzdem wird in WO00/77071 A1 nur auf Standard-Technologie zur Durchführung der Festphasenpolykondensation hingewiesen. Eine Verarbeitung eines Gemisches aus neu hergestelltem Polyester (sogenanntes "virgin"-Material) mit rezykliertem Polyester kann aber aufgrund der deutlich höheren Belastung mit Verunreinigungen in einer herkömmlichen Festphasenpolykondensationsanlage nicht über eine geforderte längere Betriebsdauer kontinuierlich verarbeitet werden.

Es war die Aufgabe der vorliegenden Erfindung, die Nachteile des vorliegend diskutierten Stands der Technik zu überwinden und ein verbessertes Verfahren und eine verbesserte Vorrichtung zur Verarbeitung eines Gemisches aus rezykliertem Polyestermaterial und einem Polyester-Prepolymer aus einem Polyester-Herstellprozess bereitzustellen.

Die vorliegende Aufgabe wird erfindungsgemäss durch ein Verfahren gemäss Anspruch 1 gelöst.

Im Detail betrifft die vorliegende Erfindung ein Verfahren zur Verarbeitung eines Gemisches aus rezykliertem Polyestermaterial und einem Polyester-Prepolymer aus einem Polyester-Herstellprozess, umfassend folgende Schritte:
- Vermischung eines rezyklierten Polyestermaterials mit einem Polyester-Prepolymer aus einem Polyester-Herstellprozess unter Herstellung eines Feststoffgemisches;
- Behandlung dieses Feststoffgemisches in einem Reaktor zur thermischen Behandlung von Schüttgütern mit einem Prozessgases im Gegenstrom oder Kreuzstrom zur Flussrichtung des Gemisches;
- Einleitung des Prozessgases, das organische Verunreinigungen und optional eine Sauerstoffmenge enthält, welche geringer ist als zur vollständigen Verbrennung der organischen Verunreinigungen in diesem Verfahren erforderlich, in zumindest einen Wärmetauscher zum Aufheizen des Prozessgases, und Aufheizen des Prozessgases in diesem Wärmetauscher,
- Geregelte Zufuhr eines sauerstoffhaltigen Gases in das Prozessgas,
- Einleitung des mit dem sauerstoffhaltigen Gas versetzten Prozessgases in einen Katalysatorbehälter mit mindestens einem darin angeordnetem Katalysatorbett, welcher vom Prozessgas von einer Eintrittsseite zu einer Austrittsseite durchströmt wird,
- Verbrennung der organischen Verunreinigungen im Prozessgas in dem zumindest einen Katalysatorbett,
- Zumindest teilweise Rückführung des Prozessgases, vorzugsweise in den Reaktor zur thermischen Behandlung von Schüttgütern,
**dadurch gekennzeichnet, dass** das Prozessgas vor Eintritt in den Katalysatorbehälter durch ein vor dem Wärmetauscher zum Aufheizen des Prozessgases angeordnetes Schutzbett mit einem festen Adsorptionsmaterial geleitet wird, das hochsiedende organische Substanzen oder organische Substanzen mit hoher Verbrennungstemperatur aus dem Prozessgasstrom entfernt, wobei eine Temperatur im Bereich von 100 bis 250°C eingestellt wird, so dass die hochsiedenden Substanzen kondensieren und vom Adsorptionsmaterial aufgenommen werden können.

Dieses Verfahren zeichnet sich insbesondere dadurch aus, dass durch das rezyklierte Polyestermaterial in den Prozess eingetragene Substanzen, welche in der Festphasenkondensation vom Prozessgas aufgenommen werden, zuverlässig aus dem Prozessgas entfernt werden können. Dadurch wird eine zuverlässige und kontinuierliche Verarbeitung eines Gemisches aus rezykliertem Polyestermaterial und einem Polyester-Prepolymer aus einem Polyester-Herstellprozess möglich. Insbesondere können erfindungsgemäss die Substanzen, welche die höchsten Verbrennungstemperaturen erfordern, vor der Verbrennung durch Adsorption aus dem Prozessgas entfernt werden. Daraus ergibt sich der Vorteil, dass tiefere Verbrennungstemperaturen zum Einsatz kommen können, wodurch kleinere Apparaten zum Heizen und Kühlen eingesetzt werden können und der benötigte Energieverbrauch vermindert werden kann.

Das erfindungsgemässe Verfahren wird zur Reinigung von Prozessgasen aus einer thermischen Behandlung von Schüttgütern verwendet, wobei die Reinigung durch katalytische Verbrennung erfolgt. Bei den Schüttgütern handelt es sich dabei um jede Form von rieselfähigen, festen Partikeln, wie beispielsweise Körnern, Flocken, Granulaten, Pulvern oder Agglomeraten.

Erfindungsgemäss handelt es sich bei den Schüttgütern um Polykondensate, nämlich Polyester.

Polymere werden durch eine Polymerisationsreaktion, wie zum Beispiel radikalische, anionische oder kationische Polymerisation, Polyaddition oder Polykondensation, aus ihren Monomeren gewonnen. Polymere eines Polymertyps können aus den gleichen Hauptmonomeren gewonnen werden. Polymere eines Polymertyps können auch aus mehreren Hauptmonomeren gewonnen werden. Die einzelnen Monomere können dabei abwechselnd, zufällig oder in Blöcken angeordnet sein. Eine begrenzte Menge weiterer Monomere, sogenannter Comonomere, kann dabei zusätzlich zum Einsatz kommen.

Monomere können aus fossilen Brennstoffen, wie Erdöl, Erdgas oder Kohle, oder aus nachwachsenden Rohstoffen gewonnen werden. Monomere können auch durch Depolymerisation oder Pyrolyse aus bestehenden Polymeren, insbesondere rezyklierten Polymeren gewonnen werden.

Speziell geeignete Polymere sind Polyester inklusive Polyhydroxyalkanoate, Polylaktide oder deren Copolymere.

Polykondensate werden durch eine Polykondensationsreaktion unter Abspaltung eines niedermolekularen Reaktionsproduktes gewonnen. Dabei kann die Polykondensation direkt zwischen den Monomeren erfolgen. Die Polykondensation kann auch über eine Zwischenstufe erfolgen, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Polyester sind Polymere, welche üblicherweise durch Polykondensation aus einer Diol-Komponente mit der allgemeinen Struktur HO-R¹-OH und einer Dicarbonsäure-Komponente mit der allgemeinen Struktur HOOC-R²-COOH gewonnen werden, wobei R¹ und R² üblicherweise aliphatische Kohlenwasserstoffe mit 1 bis 15 Kohlenstoffatomen, aromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoffatomen und 3 bis 10 Kohlenstoffatomen sind.

Üblicherweise werden lineare oder zyklische Diol-Komponenten und aromatische oder heterozyklische Dicarbonsäure-Komponenten verwendet Anstelle der Dicarbonsäure kann auch ihr entsprechender Diester, üblicherweise Dimethylester, eingesetzt werden.

Typische Beispiele für Polyester sind Polyethylenterephthalat (PET), Polybutylenterephthalat (PBT), Polytrimethylenterephthalat (PTT), Polyethylenfuranoat (PEF), Polytrimethylenfuranoat (PTF), Polybutylensuccinat (PBS) und Polyethylennaphthalat (PEN), die entweder als Homopolymer oder als Copolymere zum Einsatz kommen.

Polyester sind auch Polymere mit sich wiederholenden Estergruppen mit der allgemeinen Struktur H-[O-R-CO]ₓ-OH, wobei R üblicherweise ein aliphatischer Kohlenwasserstoff mit 1 bis 15 Kohlenstoffatomen, ein aromatischer Kohlenwasserstoff mit 1 bis 3 aromatischen Ringen, ein zyklischer Kohlenwasserstoff mit 4 bis 10 Kohlenstoffatomen oder ein heterozyklischer Kohlenwasserstoff mit 1 bis 3 Sauerstoff- oder Stickstoffatomen und 3 bis 10 Kohlenstoffatomen ist.

Ein Beispiel sind Polyhydroxyalkanoate mit der allgemeinen Struktur H-[O-C(R)H-(CH₂)ₙ-CO]ₓ-OH, wobei R üblicherweise ein Wasserstoff oder ein aliphatischer Kohlenwasserstoff mit 1 bis 15 Kohlenstoffatomen und n gleich 1 bis 10 ist. Beispiele sind Poly-4-hydroxybutyrat und Poly-3-hydroxyvalerat.

Ein weiteres Beispiel sind Polylactide mit der allgemeinen Struktur H-[O-C(R)H-CO]ₓ-OH, wobei R üblicherweise eine Methylgruppe oder ein aliphatischer Kohlenwasserstoff mit 1 bis 15 Kohlenstoffatomen ist.

Ein weiteres Beispiel ist die Polyglycolsäure mit der allgemeinen Struktur H-[O-CH₂-CO]ₓ-OH.

Polyester sind auch Polymere, welche durch Ringöffnungspolymerisation aus heterozyklischen Monomeren mit einer Estergruppe, wie zum Beispiel Polycaptrolacton aus Caprolacton, oder durch Ringöffnungspolymerisation aus heterozyklischen Monomeren mit wenigstens zwei Estergruppen, wie zum Beispiel Polylactid aus Lactid, hergestellt werden.

Das am meisten verbreitete Polylactid ist die Polymilchsäure mit der Struktur H-[O-C(CH₃)H-CO]ₓ-OH. Durch die Chiralität der Milchsäure existieren verschiedene Formen der Polymilchsäure.

Homopolymere sind Poly-L-Lactid (PLLA), das üblicherweise aus L,L-Lactid hergestellt wird, und Poly-D-Lactid (PDLA), das üblicherweise aus D,D-Lactid hergestellt wird. Copolymere wie Poly-(L-Lactid-co-D,L-Lactid) enthalten geringe Mengen an Lactid-Einheiten mit einer Chiralität, die sich vom Hauptmonomer unterscheidet.

Polyester können auch durch Biosynthese mit Hilfe von Mikroorganismen oder in pflanzlichen Zellen hergestellt werden, woraus sie durch Aufschluss der Zelle gewonnen werden.

Bei den geeigneten Polymeren kann es sich um Homopolymere handeln. Trotz der Bezeichnung Homopolymer kann sich im Herstellprozess ein geringer Anteil an Comonomeren bilden. So ist bei der Herstellung von Polyethylenterephthalat die Bildung von Diethylenglykol aus Ethylenglykol bekannt. Viele geeignete Polymere sind jedoch Copolymere, die einen gewissen Anteil an Comonomer enthalten. Die Comonomere können als Teil der Monomere in den Herstellprozess des Polymers eingeführt werden, oder sie bilden sich als Teil des Herstellprozesses, wodurch sich üblicherweise eine zufällige Verteilung im letztendlichen Polymer ergibt. Die Comonomere können auch als Blöcke, hergestellt aus unterschiedlichen Monomeren, eingefügt werden, woraus sich sogenannte Blockcopolymere ergeben.

Bei den geeigneten Polymeren kann es sich um Polymergemische handeln, welche eine beliebige Anzahl und Menge von unterschiedlichen Polymertypen enthalten können. Eine kleine Menge eines Polymers kann als Nukleierungsmittel in andern Polymeren wirken und dadurch dessen Kristallisationsrate erhöhen.

Spezifische Polymergemische können untereinander wechselwirkende Kristallstrukturen mit einem Kristallisationsverhalten bilden, das von den einzelnen Komponenten abweicht. Ein Beispiel dafür ist ein Gemisch aus PDLA und PLLA, welches eine stereokomplexe Kristallstruktur mit erhöhter Kristallinität bildet.

Nach der Polymerisation hat jede Polymerkette kettenbeendende Gruppen mit üblicherweise der Funktionalität von wenigstens einem seiner Monomere. Als Beispiel kann eine Polyesterkette eine oder mehrere Hydroxyl- und/oder Carboxylendgruppen haben. Eine Polyamidkette kann eine oder mehrere Hydroxyl- und/oder Aminendgruppen haben. Solche Endgruppen können durch ein sogenanntes Endcapping-Reagens oder durch eine Abbaureaktion modifiziert sein. Obwohl dies bei den vorstehend genannten allgemeinen Strukturen nicht spezifisch erwähnt ist, können geeignete Polymere derartige modifizierte Endgruppen haben.

Dem Polymer können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen.

Bei dem Polymer kann es sich um ein Neumaterial oder um ein Rezyklat handeln. Als Rezyklate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet. Die vorliegende Erfindung richtet sich auf die Verarbeitung eines Gemisches aus rezykliertem Polyestermaterial und einem Polyester-Prepolymer aus einem Polyester-Herstellprozess.

Polyesterherstellprozesse sind im Stand der Technik ausreichend bekannt (z.B. Scheirs/Long (Hrsg.), Modern Polyesters, Wiley 2003). Für die vorliegende Erfindung sind kontinuierliche Polyester-Herstellprozesse bevorzugt. Gemäss der vorliegenden Erfindung sind geeignete Polyester-Herstellprozesse derart gestaltet, dass mittels Schmelzphasenpolymerisation eine Polyester-Prepolymerschmelze hergestellt wird, diese Prepolymerschmelze mittels Granulatoren zu Polyester-Prepolymer-Granulaten geformt wird, und die Polyester-Prepolymer-Granulate mittels Festphasenpolykondensation zu Polyester-Granulaten verarbeitet werden. Dabei umfasst die Schmelzphasenpolymerisation einen Prozessschritt, in welchem die geeignete Viskosität für die weitere Verarbeitung erreicht wird. Dies kann zum Beispiel in einem Schmelzphasenreaktor erfolgen. Ist die geeignete Viskosität erreicht wird, die Polyesterschmelze durch geeignete Schmelzeleitungen einem oder mehreren Granulatoren zugeführt. Optional kann eine Filtration der Schmelze in einem Schmelzefilter erfolgen. Der Begriff Schmelzefilter umfasst dabei Siebwechsler und statische Filter oder Filterkerzen.

Rezyklierte Polyester können aus Industrieabfällen, zum Beispiel aus Polyester-Herstellprozessen, oder aus Umarbeitungsprozessen von Polyestern bestehen. Rezyklierte Polyester können bevorzugt aus Konsumentenabfällen bestehen, zum Beispiel aus gebrauchten Polyesterartikeln. Typische Beispiele solcher Artikel sind Polyesterflaschen, Polyesterschalen oder Polyesterfasern. Je nach Grösse und Beschaffenheit müssen die Polyester-Artikel gemahlen und/oder kompaktiert werden, um geeignete Partikelgrössen und Schüttgewichte zur weiteren Verarbeitung zu erhalten. Geeignete Schüttgewichte liegen dabei zwischen 100 und 800 kg/m³, insbesondere zwischen 200 und 500 kg/m³. Geeignete Partikelgrössen liegen dabei zwischen 1 und 50 mm, insbesondere zwischen 2 und 25 mm. Rezyklierte Polyester müssen je nach deren Verunreinigungsgrad vor der Weiterverarbeitung gereinigt werden. Dies kann Prozessschritte wie Waschen, Sortieren, oder Separieren umfassen. Weiter können rezyklierte Polyester mittels thermischer Behandlung in einem Gasstrom und/oder bei reduziertem Druck von flüchtigen Verunreinigungen und Wasser getrennt werden.

Eine Schmelze aus rezyklierten Polyestern wird üblicherweise mittels Extrusion erzeugt. Alternativ können aber auch einfache Aufschmelzreaktoren verwendet werden. Die rezyklierte Polyesterschmelze kann optional einem weiteren Druckaufbau mittels einer Schmelzepumpe, einer Abtrennung von Feststoffen mittels Schmelzefiltration und/oder einer Abtrennung von flüchtigen Verunreinigungen mittels Schleppgas oder Vakuum unterzogen werden. Bevorzugt erfolgt die Filtration der rezyklierten Polyesterschmelze durch ein Sieb mit vergleichbarer oder kleinerer Feinheit, wie einem Sieb für die Filtration der Schmelze im Polyester-Herstellprozess.

Die rezyklierte Schmelze kann granuliert werden, um rezyklierte Polyestergranulate zu erhalten. Es können herkömmliche Granulatoren wie beispielsweise Unterwassergranulationsanlagen (UWG) oder Unterwasser-Stranggranulation (USG) eingesetzt werden.

Diese rezyklierten Polyestergranulate können in einer Einheit zur Herstellung des Gemisches aus rezykliertem Polyestermaterial und einem Polyester-Prepolymer aus einem Polyester-Herstellprozess mit Granulaten aus einem Polyester-Prepolymer aus einem Polyester-Herstellprozess vermischt werden. Einheiten zur Vermischung von Granulaten sind bekannt. Beispielhaft seien gerührte oder passive Mischsilos, gerührte Mischer oder Schneckenmischer genannt.

Andererseits kann die rezyklierte Schmelze durch eine Schmelzeleitung zu einer Verbindungseinheit mit einer Schmelze aus Polyester-Prepolymer aus einem Polyester-Herstellprozess als Einheit zur Herstellung des Gemisches aus rezykliertem Polyestermaterial und einem Polyester-Prepolymer aus einem Polyester-Herstellprozess geführt werden. Dabei kann es sich beispielsweise um ein entsprechendes Rohrleitungsverbindungsstück handeln. Das Schmelzegemisch wird anschliessend in einer gemeinsamen Schmelzeleitung in einem Granulator (beispielsweise einer Unterwassergranulationsanlage (UWG) oder einer Unterwasser-Stranggranulationsanlage (USG)) granuliert.

Erfindungsgemäss werden unter einem Feststoffgemisch ein Gemisch aus Granulaten unterschiedlicher Zusammensetzung (virgin PET oder rPET) als auch Granulate verstanden, welche durch Vermischung einer rezyklierte Schmelze und einer Schmelze aus Polyester-Prepolymer aus einem Polyester-Herstellprozess und anschliessender Granulation dieser vermischten Schmelze hergestellt wurden.

Die Verbindungseinheit befindet sich zwischen dem Prozessschritt, in welchem die geeignete Viskosität der Schmelze für die weitere Verarbeitung erreicht wird (z.B. in einer Schmelzpolykondensationsanlage oder einem Extruder), und zumindest einem der Granulatoren. Die Verbindungseinheit kann sich vor oder nach einer optionalen Filtration im Polyester-Herstellprozess befinden. Nach der Verbindungseinheit kann optional ein statischer Mischer zum Einsatz kommen. Wenn die Verbindungseinheit jedoch vor der optionalen Filtration liegt, kann auf den statischen Mischer optional verzichtet werden.

Eine weitere Quelle für Kontaminationen kann in den Leitungen zu dieser Verbindungseinheit entstehen, bei welchem eine rezyklierte Polyesterschmelze mit einer Polyester-Prepolymerschmelze aus einem Polyester-Herstellprozess vermischt wird. Auch bei der Herstellung der Polyester-Prepolymerschmelze und der rezyklierten Schmelze verweist die WO00/77071 A1 lediglich auf allgemein bekannte Technologie. Im Stand der Technik ist es üblich, dass Anlagen zur Polyesterherstellung vielfach kontinuierlich betrieben werden und über Jahre hinweg ununterbrochen in Betrieb sind. Dies kann von Extrusionsprozessen, die üblicherweise mehrere Prozessunterbrechungen pro Jahr erfahren, nicht erwartet werden.

Während solcher Unterbrechungen verweilt rezyklierter Polyester über längere Zeit bei hohen Temperaturen in den Schmelzeleitungen. Selbst wenn solche Leitungen gekühlt werden, entsteht trotzdem degradierter Polyester, der bei einem Neustart des Extrusionsprozesses mit der Polyester-Prepolymerschmelze vermischt wird, wodurch grosse Mengen an unbrauchbarem Produkt entstehen.

Erfindungsgemäss bevorzugt ist in der Verbindungseinheit oder unmittelbar vor der Verbindungseinheit ein Schmelzeventil angeordnet, das es erlaubt, die Zufuhrleitung (Schmelzeleitung) für rezyklierte Polyesterschmelze abzusperren. Dies hat den Vorteil, dass im Fall einer Betriebsunterbrechung, bei welchem rezyklierter Polyester über längere Zeit bei hohen Temperaturen in den Schmelzeleitungen verweilt und selbst bei Kühlung dieser Leitungen degradiert, bei einem Neustart des Extrusionsprozesses derart degradierter rezyklierter Polyester nicht mit der Polyester-Prepolymerschmelze vermischt wird. Vielmehr kann derart degradierter rezyklierter Polyester aus der Anlage entfernt werden. Auf diese Weise wird die Bildung grosser Mengen an unbrauchbarem Produkt vermieden.

Gemäss einer bevorzugten Ausführungsform der vorliegenden Erfindung befindet sich in der Schmelzeleitung vor der Verbindungseinheit zumindest ein Spülventil. Das Spülventil kann dazu verwendet werden, Schmelze von rezykliertem Polyester, welche nicht den gewünschten Spezifikationen entspricht, aus der Anlage herauszuführen.

Dabei kann es sich um Anfahrmaterial, das insbesondere zu tiefe Viskosität und zu starke Gelbfärbung aufweist, oder um ein Material handeln, das aufgrund von Verunreinigungen ausserhalb der gewünschten Vorgaben für kritische Qualitätsparameter (wie zum Beispiel Viskosität oder Farbe) liegt.

Das Spülventil kann direkt in das Schmelzeventil an der Verbindungseinheit integriert sein. Zusätzlich zum Spülventil kann im Anschluss an die Extrusionseinheit ein Anfahrventil angeordnet sein, um Anfahrmaterial aus dem Extrusionsprozess herauszuführen.

Ein weiterer Nachteil der Verfahrensführung gemäss der WO 00/77071 A1 ergibt sich aufgrund der häufig unterschiedlichen Qualitätsunterschiede an rezykliertem Eingangsmaterial. Zu hohe Mengen an Verunreinigungen, die zum Teil in Clustern vorliegen, können häufig durch analytische Massnahmen nicht erfasst werden. Qualitätsmängel sind meist erst nach Granulation oder zum Teil auch erst im Endprodukt ersichtlich. Daraus können grosse Mengen an minderwertigen Produktionschargen entstehen, bei denen nicht nur der rezyklierte Polyester, sondern auch das Polyester-Prepolymer aus dem Herstellprozess unbrauchbar wird.

Gemäss einer weiteren bevorzugten Ausführung der Erfindung erfolgt daher in der Schmelzeleitung für rezyklierte Polyesterschmelze eine Messung eines Qualitätsparameters.

Der gemessene Qualitätsparameter kann dazu verwendet werden, dass beim Erreichen eines kritischen Wertes die rezyklierte Polyesterschmelze automatisch aus der Anlage herausgeführt wird.

Der gemessene Qualitätsparameter kann alternativ dazu verwendet werden, dass aufgrund des gemessenen Parametes Einstellungen im Polyester-Herstellprozess vorgenommen werden oder durch eine Regelung automatische Anpassungen an Prozessparameter erfolgen. Insbesondere bevorzugt ist die Messung eines Farbwertes und die Einstellung oder Regelung einer Farbstoffzugabe in den Polyesterherstellprozess.

Alternativ kann der Messpunkt auch nach der Verbindungseinheit liegen.

Als Qualitätsparameter gelten insbesondere Farbe und Viskosität. Beide lassen sich in-line oder on-line messen. Eine in-line-Messung der Viskosität erfolgt zum Beispiel mittels Messgeräten, die die Torsionskraft einer Messsonde in der Schmelze messen. Eine in-line-Messung der Viskosität erfolgt zum Beispiel auch mittels Messung des Druckabfalls in einem definierten Messspalt, durch welchen die Schmelze fliesst, wobei die gemessene Schmelze im Prozess verbleibt oder in diesen zurückgeführt wird. Eine on-line Messung der Viskosität erfolgt zum Beispiel mittels Messung des Druckabfalls in einem definierten Messspalt, durch welchen ein Teil der Schmelze fliesst, wobei die gemessene Schmelze aus dem Prozess entfernt wird. In allen Fällen wird über die Messung einer mechanischen Grösse aufgrund von Vergleichsmessungen eine Viskosität berechnet.

Eine in-line Messung der Farbe erfolgt zum Beispiel mittels einer Lichtquelle auf einer Seite der Schmelzeleitung und eines lichtempfindlichen Sensors auf der anderen Seite der Schmelzeleitung, wobei über die absorbierte Lichtmenge bei verschiedenen Wellenlängen ein Farbwert berechnet werden kann.

Eine on-line Messung der Farbe erfolgt zum Beispiel mittels einer Lichtquelle auf einer Seite eines aus der Schmelze hegestellten Testbandes und eines lichtempfindlichen Sensors auf der anderen Seite, wobei über die absorbierte Lichtmenge bei verschiedenen Wellenlängen ein Farbwert berechnet werden kann. Lichtquelle und Sensor können über Lichtleiter mit der eigentlichen Messstelle verbunden sein.

Gemäss einer bevorzugten Ausführungsform der vorliegenden Erfindung ist der Schritt der Festphasenpolykondensation derart dimensioniert, dass sowohl die im Wesentlichen volle Kapazität des Polyester-Prepolymer-Herstellprozesses als auch die im Wesentlichen volle Menge der installierten Kapazität an Rezyklat verarbeitet werden kann. Insbesondere bei einem späteren Umbau einer Anlage zur Polyester-Herstellung kann nach der Installation einer Rezyklat-Zuführeinrichtung durch Ausbau der Festphasenpolykondensation die gesamte Anlagenleistung erhöht werden.

Die Mischung aus rezykliertem Polyester und Polyester-Pre-polymer aus einem Polyester Herstellprozess kann jedes beliebige Mischungsverhältnis umfassen. Erfindungsgemäss bevorzugt liegt das Verhältnis von Rezyklat zu Pre-polymer im Bereich von 5% zu 95% bis 75% zu 25%.

Einschränkend wirkt hierbei, dass eine Anlage zur Herstellung von Polyester-Prepolymer mit einer gewissen Grösse ausgelegt ist und nicht beliebig in ihrer Leistung reduziert werden kann. Eine bevorzugte Ausführungsform der vorliegenden Erfindung sieht daher eine Mischung aus rezykliertem Polyester und Polyester-Pre-polymer aus einem Polyester Herstellprozess mit maximal 50% Gehalt an Rezyklat vor. Der minimale Gehalt der Mischung an Rezyklat ergibt sich aus der Wirtschaftlichkeit des zusätzlichen Prozessschrittes der Vermischung, was üblicherweise einen Rezyklatgehalt von mindestens 10%, insbesondere mindestens 15% bedingt.

Zur thermischen Behandlung der Schüttgüter werden erfindungsgemäss Prozessgase mit geringem Sauerstoffgehalt, wie zum Beispiel Stickstoff, Kohlendioxid, Edelgase, Wasserdampf oder Gemische dieser Gase, verwendet. Derartige Prozessgase werden üblicherweise als Inertgase bezeichnet. Inertgase kommen insbesondere dann zum Einsatz, wenn es sich bei den Schüttgütern um sauerstoffempfindliche Schüttgüter handelt.

Schüttgüter werden als sauerstoffempfindliche Schüttgüter bezeichnet, wenn sich die Schüttgüter während der thermischen Behandlung durch die Einwirkung von Sauerstoff stärker verändern, als dies bei einer thermischen Behandlung ohne Sauerstoff der Fall wäre. Derartige Veränderungen können zum Beispiel zur Verfärbung, Bildung von Spaltprodukten und/oder Reduktion des Molekulargewichtes des Schüttgutes führen.

Trotz der Bezeichnung Inertgas kann das Prozessgas geringe Mengen an Sauerstoff enthalten, wobei dieser Sauerstoff zum Beispiel durch Leckagen ins Prozessgas eingedrungen oder durch unvollständige Verbrennung im Prozessgas zurück geblieben sein kann.

Als thermischer Behandlungsprozess von Schüttgütern wird jeder Prozess bezeichnet, in dem Schüttgüter unter Einwirkung eines Prozessgases für eine bestimmte Verweilzeit bei einer bestimmten Temperatur behandelt werden. Verweilzeit und Temperatur können über einen sehr breiten Bereich variiert werden, wobei Verweilzeiten von wenigen Minuten bis mehreren hundert Stunden und Temperaturen zwischen der Siedetemperatur des Prozessgases und der Schmelz- oder Zersetzungstemperatur des Schüttgutes denkbar sind.

Die thermische Behandlung erfolgt üblicherweise in einem Behandlungsraum, der das Schüttgut und das Prozessgas aufnehmen kann. Der entsprechende Behandlungsraum wird üblicherweise durch Reaktoren gebildet. Geeignete Reaktoren können konisch oder zylindrisch, mit rundem oder eckigem Querschnitt gebaut sein. Geeignete Reaktoren weisen zumindest eine Eintrittsöffnung und eine Austragsöffnung für das Schüttgut sowie zumindest eine Eintrittsöffnung und eine Austragsöffnung für das Prozessgas auf. Die Reaktoren können verschiedene Einbauten zur Beeinflussung des Produktflusses und/oder Gasflusses aufweisen.

Die Einwirkung des Prozessgases erfolgt dabei derart, dass organische Substanzen aus dem Polymer vom Prozessgas aufgenommen und aus dem Behandlungsraum ausgetragen werden.

Bevorzugt erfolgt die thermische Behandlung kontinuierlich oder semi-kontinuierlich, wobei dem Reaktor sowohl das Prozessgas wie auch das Schüttgut entweder kontinuierlich oder in einzelnen Chargen, die kleiner sind als das Reaktorvolumen, zugeführt wird. Das Prozessgas wird dabei entweder im Kreuzstrom oder Gegenstrom zur Fliessrichtung der Schüttgüter geführt. Eine bevorzugte Ausführung sieht die kontinuierliche thermische Behandlung in einem Wanderbettreaktor im Gegenstrom vor.

Alternativ ist auch eine diskontinuierliche Fahrweise denkbar, bei der eine gegebene Schüttgutmenge in einem Reaktor von Prozessgas durchströmt wird.

Die Grösse der Reaktoren ergibt sich durch die Anforderungen der thermischen Behandlung (Verweilzeit und Durchsatz). Beispiele für entsprechende Reaktoren sind aus der EP-2 398 598 A1 bekannt.

Die organischen Substanzen, die vom Prozessgas aufgenommen werden, umfassen jegliche organische Substanzen, die während der thermischen Behandlung eines Schüttgutes aus dem Schüttgut freigesetzt werden und in Gasform oder gelöst im Prozessgas vorliegen. Handelt es sich bei dem Schüttgut um ein Polymer, umfassen die organischen Substanzen hauptsächlich Rückstände aus dem Polymerisationsprozess, Spaltprodukte aus dem Polymer und den im Polymer enthaltenen Additiven, sowie Verunreinigungen, die zusammen mit den Polymeren in den Behandlungsprozess eingetragen wurden, und deren Spaltprodukte. Üblicherweise handelt es sich bei den organischen Substanzen um Kohlenwasserstoffe, wobei Fremdatome, wie Stickstoff, Phosphor, Schwefel, Chor, Fluor oder metallische Komplexbildner, eingebunden sein können.

Erfindungsgemäss wird zumindest ein Teil des Prozessgases im Kreislauf geführt. Dazu wird Prozessgas aus dem Behandlungsraum, vorzugsweise Reaktor, zur thermischen Behandlung eines Schüttgutmaterials der katalytischen Verbrennung zugeführt und anschliessend wieder in den Behandlungsraum zurückgeführt.

Erfindungsgemäss umfasst das Verfahren zur Reinigung eines Prozessgases aus einem thermischen Behandlungsprozess von Schüttgütern zumindest einen Schritt einer katalytischen Verbrennung.

Erfindungsgemäss enthält das Prozessgas vor der Reinigung keinen Sauerstoff oder eine Sauerstoffmenge, die geringer ist als eine Sauerstoffmenge, die zur vollständigen Verbrennung der organischen Verunreinigungen im Prozessgas nötig ist. Somit muss dem Prozessgas vor der katalytischen Verbrennung Sauerstoff zugesetzt werden. Der Sauerstoff wird in Form von mindestens einem Sauerstoff oder Ozon enthaltenden Gas zugeführt, wobei häufig Luft zum Einsatz kommt.

Die Zufuhr des sauerstoffhaltigen Gases erfolgt mittels einer Zufuhrleitung in das Prozessgas, wobei diese Leitung Armaturen zur Regelung und Messung der zugeführten Gasmenge aufweisen kann.

Erfindungsgemäss wird das Prozessgas zumindest teilweise im Kreislauf geführt. Bei sauerstoffempfindlichen Schüttgütern im thermischen Behandlungsprozess muss somit der Sauerstoffgehalt im gereinigten Prozessgas gering gehalten werden.

Sauerstoff liesse sich durch sogenannte Deoxer oder durch Adsorption aus dem Prozessgas entfernen. Dies ist jedoch apparativ aufwendig und teuer. Vorteilhafter ist es, die Sauerstoffzufuhr zum verunreinigten Prozessgas derart zu regeln, dass die zugegebene Sauerstoffmenge der für die Verbrennung benötigten Sauerstoffmenge entspricht oder diese nur geringfügig übersteigt.

Vorzugsweise wird so viel sauerstoffhaltiges Gas zudosiert, dass der nach dem Katalysator gemessene durchschnittliche Sauerstoffgehalt 0-500 ppm v/v, bevorzugt 12-150 ppm v/v, beträgt oder dass der nach dem Katalysator gemessene durchschnittliche Kohlenmonoxidgehalt 0-200 ppm v/v, bevorzugt 2-50 ppm v/v beträgt. Die Durchschnittswerte beziehen sich dabei auf langfristige Werte, zum Beispiel über mehrere Stunden, bevorzugt über 2 Stunden, berechnet. Eine Hydrierung des restlichen Sauerstoffes oder eine Bindung von restlichem Kohlenmonoxid und/oder Sauerstoff, zum Beispiel durch Adsorption, ist bei derart geringen Restmengen üblicherweise nicht notwendig. Trotzdem kann eine weitere Sauerstoffreduktion für die Behandlung von stark sauerstoffempfindlichen Schüttgütern hinzugefügt werden.

Die erfindungsgemässe Reinigung des verunreinigten Gases erfolgt durch katalytische Verbrennung. Bei der katalytischen Verbrennung erfolgt die Umsetzung organischer Substanzen mit Sauerstoff in Gegenwart einer katalytisch aktiven Substanz im Wesentlichen zu CO₂ und Wasser. Dabei reduziert die katalytisch aktive Substanz die Aktivierungsenergie der Oxidationsreaktion, wodurch die Verbrennung bei reduzierter Temperatur erfolgen kann. Üblicherweise erfolgt die katalytische Verbrennung in der Gegenwart eines Feststoffkatalysators. Als Katalysatormaterial werden zum Beispiel Edelmetalle oder Metalloxide verwendet.

Bevorzugte Katalysatormaterialien enthalten einen Anteil an Platin, Palladium oder Rhodium als Edelmetalle.

Bevorzugte Metalloxide umfassen Nebengruppenelementmetalle, insbesondere aus der vierten Periode des Periodensystems der Elemente (Sc, Ti, V, Cr, Mn, Fe, Co, Ni, Cu, Zn), wobei es sich als besonders vorteilhaft erwiesen hat, wenn das Katalysatormaterial zumindest Manganoxid, Eisenoxid, Kupferoxid oder Kobaltoxid enthält. Weitere Angaben über Zusammensetzung und Anwendung derartiger Katalysatoren können aus der DE 10 2004 006 861 A1 entnommen werden.

Das Katalysatormaterial kann dabei als Schüttgut (Vollmaterial) vorliegen oder auf ein Trägermaterial aufgebracht sein, wobei es sich bei geeigneten Trägermaterialien zum Beispiel um Wabenstrukturen oder poröse Schüttgutkugeln handeln kann. Bevorzugterweise werden als Trägermaterial Aluminiumoxidkugeln verwendet, die zusätzlich eine Sauerstoff adsorbierende Schicht aufweisen.

Die bevorzugte Schüttdichte des erfindungsgemäss eingesetzten Katalysatorschüttgutes (als Vollmaterial oder auf Trägermaterial) liegt in einem Bereich von etwa 100 bis 1500 kg/dm³, insbesondere 200 bis 900 kg/dm³.

Die bevorzugte Korngrösse des erfindungsgemäss eingesetzten Katalysatorschüttgutes liegt in einem Bereich von etwa 0.1 bis 50 mm, insbesondere 1-10 mm.

Die bevorzugte spezifische Oberfläche des erfindungsgemäss eingesetzten Katalysatorschüttgutes liegt in einem Bereich von etwa 50 bis 500 m²/g, insbesondere 60 bis 300 m²/g.

Bevorzugterweise liegt das Katalysatorschüttgut oder die Wabenstruktur als sogenanntes Katalysatorbett in einem Katalysatorbehälter vor und wird vom Prozessgas zusammen mit der zur Verbrennung notwendigen Sauerstoffmenge von einer Eintrittsseite zu einer Austrittsseite des Katalysatorbettes durchströmt. Die Querschnittsfläche des Katalysatorbettes wird derart gewählt, dass sich eine Lineargeschwindigkeit des Prozessgases bzw. eine Leerrohr-Geschwindigkeit (Betriebs-Volumenstrom / Katalysatorschüttungs-Querschnitt in Richtung der Flussrichtung des Gases) in einem Bereich von etwa 0.3 bis 5 m/s ergibt, wobei ein Druckverlust von 5 mbar bis 100 mbar, insbesondere 10 mbar bis 50 mbar entsteht. Die Schichtdicke des Katalysatorbettes soll über deren ganzen Querschnitt konstant sein und zwischen 100 mm und 1000 mm, insbesondere zwischen 200 mm und 500 mm betragen. Dabei soll die Raumgeschwindigkeit (Norm-Volumenstrom des Prozessgases dividiert durch das Katalysatorvolumen) in einem Bereich von 1000 bis 60000 h⁻¹, insbesondere von 3000 bis 24000 h⁻¹ bevorzugt von 4000 bis 12000 h⁻¹ liegen.

Die Verbrennung im Katalysatorbett findet vorzugsweise in einem Temperaturbereich von 150 °C bis 600 °C, insbesondere von 170 °C bis 450 °C statt.

Die Verbrennung muss dabei nicht zu 100% erfolgen. Da aber bei unvollständiger Verbrennung Nebenprodukte wie zum Beispiel CO oder kurzkettige organische Säuren entstehen können, wird ein möglichst hoher Umsatzgrad von über 95%, bevorzugt von über 98% und insbesondere von über 99% angestrebt. Die Restmenge an organischen Verunreinigungen im Prozessgas soll nach der katalytischen Verbrennung zwischen 0 und 50 cm³/m³, insbesondere zwischen 0 und 20 cm³/m³ betragen.

Das verunreinigte Prozessgas kann vor der katalytischen Verbrennung weitere Prozessschritte durchlaufen, wie zum Beispiel eine Druckerhöhung, einen Prozessschritt zur Abscheidung von festen Verunreinigungen, zum Beispiel mittels eines Zyklonabscheiders und/oder eines Filters, eine Vermischung mit dem zugeführten sauerstoffhaltigen Gas, zum Beispiel mittels eines statischen Mischers, sowie eine Erwärmung zur Erhöhung der Temperatur auf eine geeignete Verbrennungstemperatur, zum Beispiel mittels eines Wärmetauschers zur Wärmerückgewinnung und/oder mittels eines Prozessgaserhitzers.

Gegebenenfalls kann auch das Katalysatorbett direkt beheizt werden, zum Beispiel durch externe Wärmequellen oder durch die Verbrennungswärme der Verunreinigungen.

Das gereinigte Prozessgas kann nach der katalytischen Verbrennung weitere Prozessschritte durchlaufen, wie zum Beispiel eine Kühlung, eine Trocknung, eine Druckerhöhung, einen Prozessschritt zur Abscheidung von festen Verunreinigungen zum Beispiel mittels eines Zyklonabscheiders und/oder eines Filters, eine Erwärmung sowie eine Vermischung mit Additiven oder weiteren Prozessgasströmen.

Vor dem Eintritt in den Katalysatorbehälter wird dem verunreinigten Prozessgas Sauerstoff zugeführt.

Zur Regelung der Sauerstoffzufuhr wird zumindest eine Gaskomponente gemessen, über die sich die Menge an benötigtem Sauerstoff ermitteln und einstellen lässt. Die Sauerstoffzufuhr lässt sich zum Beispiel durch einen Stellbefehl zu einem Regelventil in einer Zufuhrleitung für Pressluft zum Prozessgas erreichen, wobei der Stellbefehl von einer Steuereinheit ausgehend von Messwerten der Gaskomponente berechnet wird.

Die Messung der Gaskomponente erfolgt bevorzugt in einer Messkammer, wie dies in der CH-698 275 A2 beschrieben ist.

Wesentlich für den Betrieb der katalytischen Verbrennung sind die geregelte Einspeisung des sauerstoffhaltigen Gases in das Prozessgas, das Aufheizen des Prozessgases auf eine geeignete Verbrennungstemperatur in einem Wärmetauscher und die eigentliche Verbrennung im Katalysatorbett. Zur Optimierung des Prozesses wird vorzugsweise zudem Wärme aus dem Prozessgas nach der katalytischen Verbrennung in das Prozessgas vor dem Wärmetauscher zum Aufheizen des Prozessgases zurückgeführt. Dies kann vorzugsweise mittels eines Wärmetauschers zur Energierückgewinnung erfolgen.

Das Aufheizen des Prozessgases erfolgt beispielsweise in einem Wärmetauscher, der zum Beispiel als Elektroerhitzer mit Heizstäben in direktem Kontakt mit Prozessgas oder als Platten- oder Rohrbündelwärmetauschern mit indirektem Wärmetransfer von einem Heizmedium zum Prozessgas ausgeführt sein kann. Derartige Wärmetauscher werden auch als Prozessgaserhitzer bezeichnet.

Die Verbrennung im Katalysatorbett erfolgt dabei in einem Katalysatorbehälter, in dem das Katalysatorbett derart angeordnet ist, dass alles Prozessgas auf dem Weg vom Eintritt in den Katalysatorbehälter zum Austritt aus dem Katalysatorbehälter das Katalysatorbett durchströmen muss.

Die Rückführung der Wärme aus dem Prozessgas erfolgt beispielsweise in einem Wärmetauscher, der zum Beispiel als Platten- oder Rohrbündelwärmetauscher mit indirektem Wärmetransfer von Prozessgas nach der katalytischen Verbrennung zum Prozessgas vor dem Wärmetauscher zum Aufheizen des Prozessgases ausgeführt sein kann. Derartige Wärmetauscher zur Energierückgewinnung werden auch als Economizer bezeichnet.

Gemäss einer bevorzugten Ausführungsform der vorliegenden Erfindung werden das Katalysatorbett, der Prozessgaserhitzer sowie der Economizer von einem gemeinsamen Mantel umschlossen. Der bevorzugte Aufbau ist derart, dass der Economizer in einer Linie mit dem Prozessgaserhitzer angeordnet ist und der Prozessgaserhitzer in einer Linie mit dem Katalysatorbett angeordnet ist. Insbesondere ist der Economizer über dem Prozessgaserhitzer und dieser wiederum über dem Katalysatorbett angeordnet.

Ist der Prozessgaserhitzer als Elektroerhitzer ausgeführt, kann das Heizregister direkt in den Eintrittsbereich des Katalysatorbehälters integriert werden. Ist der Prozessgaserhitzer als Rohrbündelwärmetauscher ausgeführt, kann das zu reinigende Prozessgas die Rohre des Wärmetauschers in einer Linie mit der Durchflussrichtung durch den Katalysatorbehälter durchströmen.

Ist der Economizer als Rohrbündelwärmetauscher ausgeführt, kann das zu reinigende Prozessgas die Rohre des Wärmetauschers in einer Linie mit der Durchflussrichtung durch den Prozessgaserhitzer durchströmen.

Eine Ausführungsform der vorliegenden Erfindung sieht vor, dass durchgehende Rohre für den Economizer und den Prozessgaserhitzer verwendet werden.

Der gemeinsame Mantel hat bevorzugterweise den gleichen Durchmesser über die gesamte Länge der verbundenen Prozessschritte. Liegen unterschiedliche Durchmesser für einzelne Prozessstufen vor, so erfolgt ein Übergang von einem Durchmesser zum nächsten ohne zwischenzeitliche Einschnürung auf ein dazwischen liegendes Rohr. Das Durchmesser-Verhältnis von der Prozessstufe mit dem grössten Durchmesser zur Prozessstufe mit dem kleinsten Durchmesser soll dabei 2:1 und insbesondere 1.6:1 nicht überschreiten. Durch die Gasführung im gemeinsamen Mantel ergibt sich der Vorteil, dass das zu reinigende Prozessgas gleichmässig dem Katalysatorbett zugeführt wird.

Im unteren Bereich des Katalysatorbehälters befindet sich üblicherweise eine Gasaustrittsöffnung, von der das Prozessgas zu einer üblicherweise seitlichen Eintrittsöffnung in den Economizer geführt wird. Die dazu benötigte Rückführleitung kann als Rohrleitung oder Fliesskanal innerhalb oder ausserhalb des gemeinsamen Mantels ausgeführt sein.

Das Katalysatormaterial kann von einem Trennelement, das zwar Gas aber kein Katalysatormaterial durchlässt, im mittleren Teil des Katalysatorbehälters vorgelegt werden.

Das Trennelement ist üblicherweise ein Sieb, das so im Katalysatorbehälter angeordnet ist, dass alles Prozessgas das Sieb und das sich darauf befindende Katalysatorbett durchströmen muss.

Der Katalysatorbehälter ist vorzugsweise derart gebaut, dass sich der Bereich mit dem Sieb und dem Katalysatorbett vom darüber liegenden Prozessgaserhitzer trennen lässt, um einen Austausch von Katalysatormaterial zu ermöglichen.

Da es in einem Apparat mit gemeinsamem Mantel und insbesondere in Rohrbündelwärmetauschern nur zu einer geringen Durchmischung des Prozessgases kommt, sollte das sauerstoffhaltige Gas, bevorzugt noch vor Eintritt in den Economizer, möglichst homogen im Prozessgas verteilt werden. Dazu kann zum Beispiel ein Mischelement, wie ein statischer Mischer oder eine Verteildüse verwendet werden. Alternativ kann ein Mischelement auch im oben beschriebenen gemeinsamen Mantel angeordnet sein.

Im Stand der Technik sind Adsorptionsschritte zur Entfernung von sogenannten Katalysatorgiften bekannt. Als Katalysatorgifte sind zumeist anorganische Substanzen bekannt, die sich auf der Oberfläche des Katalysatormaterials ablagern und damit zu einer direkten Deaktivierung des Katalysators für die katalytische Verbrennung führen. Übliche Katalysatorgifte sind Halogene, Schwefel und Schwermetalle. Die Adsorption der Katalysatorgifte kann am Adsorptionsmaterial oder an einer adsorbierenden Beschichtung auf einem Trägermaterial erfolgen. Übliche adsorbierende Beschichtungen sind Basen wie Natriumhydroxid, Kaliumhydroxid oder auch Calciumoxid, sowie Natrium- oder Kaliumcarbonate.

Überraschend wurde gefunden, dass sich derartige Adsorptionsmaterialien auch zur Entfernung von hochsiedenden organischen Substanzen oder organischen Substanzen mit hoher Verbrennungstemperatur eignen. Derartige Substanzen führen bei unvollständiger Verbrennung zu einer Deaktivierung des Katalysators für die katalytische Verbrennung. Insbesondere hochsiedende Kohlenwasserstoffe wirken deaktivierend, da sie bei unvollständiger Verbrennung zu Kohlenstoffablagerungen auf dem Katalysatormaterial führen können oder direkt die Poren des Trägermaterials, auf dem das Katalysatormaterial aufgebracht ist, verstopfen.

Gemäss einer bevorzugten Ausführungsform der vorliegenden Erfindung durchläuft das verunreinigte Gas vor der katalytischen Verbrennung einen Schritt zur Adsorption von hochsiedenden organischen Substanzen oder organischen Substanzen mit hoher Verbrennungstemperatur an einem festen Adsorptionsmaterial in einem Schutzbett.

Das Schutzbett kann dabei als eine mit einem Adsorptionsmaterial beschichtete Oberfläche ausgeführt sein. Bevorzugt besteht das Schutzbett jedoch aus einem als Schüttgut vorliegenden festen Material, welches vollständig aus einem Adsorptionsmaterial bestehen kann oder mit einem Adsorptionsmaterial beschichtet sein kann. Bevorzugt liegt das Schutzbett in einem Adsorptionsbehälter vor. Das Prozessgas durchströmt den Adsorptionsbehälter von einer Eintrittsseite zu einer Austrittsseite und durchströmt dabei das Adsorptionsbett.

Das Schutzbettmaterial kann von einem Trennelement, das zwar Gas aber kein Schutzbettmaterial durchlässt, im mittleren Teil des Adsorptionsbehälters vorgelegt werden.

Das Trennelement ist üblicherweise ein Sieb, das so im Adsorptionsbehälter angeordnet ist, dass alles Prozessgas das Sieb und das sich darauf befindende Schutzbett durchströmen muss.

Das Schutzbett kann derart gewählt werden, dass es Substanzen aus dem Prozessgas chemisch bindet, oder dass es Substanzen aus dem Prozessgas physikalisch anlagert.

Die Eintrittstemperatur des Prozessgases in den Adsorptionsbehälter kann einen breiten Bereich umfassen. Sie muss allerdings hoch genug sein, um allfällige erforderliche chemische Reaktionen zu gewährleisten, und tief genug sein, um eine ausreichende Anlagerung physikalisch zu bindender Substanzen zu ermöglichen.

Insbesondere erfolgt die Einstellung der Temperatur derart, dass hochsiedende Substanzen kondensieren und vom Adsorptionsmaterial aufgenommen werden können. Enthält das Prozessgas Wasser, so wird die Temperatur derart gewählt, dass keine Kondensation von Wasser im Schutzbett erfolgt. Für die Behandlung von thermoplastischen Polykondensaten, vorliegend als Neumaterial oder als Rezyklat, liegt die bevorzugte Temperatur im Bereich von 100 bis 250°C, bevorzugter über 120°C und besonders bevorzugt unter 170°C, insbesondere bevorzugt von 120°C bis 170°C.

Zur Einstellung der Temperatur kann das Prozessgas mittels Wärmetauschern aufgeheizt oder üblicherweise gekühlt werden. Die Kühlung erfolgt bevorzugt in Doppelmantelrohren oder Rohrbündelwärmetauschern, um Ablagerungen von kondensierenden Substanzen zu vermeiden.

Die Kontaktzeit des Prozessgases im Schutzbett beträgt dazu von einer Zehntelsekunde bis zu einigen Minuten. Bevorzugt sind Kontaktzeiten im Bereich von 2 bis 20 Sekunden.

Die Querschnittsfläche des Schutzbettes wird derart gewählt, dass sich eine Lineargeschwindigkeit des Prozessgases bzw. eine Leerrohr-Geschwindigkeit (Betriebs-Volumenstrom / Schutzbettschüttungs-Querschnitt in Richtung der Flussrichtung des Gases) in einem Bereich von etwa 0.05 bis 3 m/s ergibt, wobei ein Druckverlust von 10 mbar bis 200 mbar, insbesondere 20 mbar bis 100 mbar entsteht. Die Schichtdicke des Schutzbettes soll über deren ganzen Querschnitt konstant sein und im Verhältnis 10 : 1 bis 1 : 10 zum Durchmesser der Schutzbettschüttung betragen.

Insbesondere wird das Adsorptionsmaterial derart gewählt, dass hochsiedende Substanzen aus dem Prozessgas entfernt werden, wobei zumindest eine Reduktion auf unter 20%, bevorzugt auf unter 10% ihres Ausgangswerts im Prozessgas erfolgen soll.

Beispiele für erfindungsgemäss einsetzbare Adsorptionsmaterialen sind Zeolithe, Silikagele, Aktivkohle, aktiviertes Aluminiumoxid und Aluminiumdioxid.

Die vorliegende Erfindung betrifft somit weiterhin eine Vorrichtung zur Verarbeitung eines Gemisches aus rezykliertem Polyestermaterial und einem Polyester-Prepolymer aus einem Polyester-Herstellprozess, umfassend
eine Einheit zur Herstellung des Gemisches aus rezykliertem Polyestermaterial und einem Polyester-Prepolymer aus einem Polyester-Herstellprozess;
einen Reaktor zur thermischen Behandlung des Gemisches aus rezykliertem Polyestermaterial und einem Polyester-Prepolymer aus einem Polyester-Herstellprozess mit einem Prozessgas;
zumindest ein Katalysatorbett, welches in einem Katalysatorbehälter angeordnet ist, der eine Eintrittsseite und eine Austrittsseite für das Prozessgas aus dem Reaktor zur thermischen Behandlung des Gemisches aufweist,
vorzugsweise zumindest eine Verbindungsleitung, die eine Austrittsseite des Reaktors mit einer Eintrittsseite des Katalysatorbehälters verbindet, und eine Verbindungsleitung, die eine Eintrittsseite des Reaktors mit einer Austrittsseite des Katalysatorbehälters verbindet,
zumindest einem Wärmetauscher zum Aufheizen des Prozessgases, welcher vor der Eintrittsseite in den Katalysatorbehälters angeordnet ist,
vorzugsweise zumindest einem Wärmetauscher zur Energierückgewinnung, welcher dem zumindest einem Wärmetauscher zum Aufheizen des Prozessgases vorgeschaltet und gleichzeitig der Austrittsseite des Katalysatorbehälters nachgeschaltet ist;
dadurch gekennzeichnet, dass vor dem Wärmetauscher zum Aufheizen des Prozessgases und somit vor dem Katalysatorbett ein Schutzbett mit einem festen Adsorptionsmaterial angeordnet ist, das bei einer Temperatur im Bereich von 100 bis 250°C hochsiedende organische Substanzen oder organische Substanzen mit hoher Verbrennungstemperatur aus dem Prozessgasstrom entfernen kann, indem die hochsiedenden Substanzen kondensieren und vom Adsorptionsmaterial aufgenommen werden können.

Erfindungsgemäss können herkömmliche Anlagen zur thermischen Behandlung eines Schüttgutes in eine erfindungsgemässe Vorrichtung umgebaut werden, in welcher eines der erfindungsgemässen Verfahren durchgeführt werden kann.

Die vorliegende Erfindung betrifft somit auch ein Verfahren zum Umbau einer Anlage zur Nachkondensation von Polyestergranulat-Neumaterial zu einer Anlage zur Nachkondensation von Polyestergranulat, das zumindest teilweise aus regranuliertem Polyesterrezyklat besteht, wobei die Nachkondensation in fester Phase in einem Reaktor stattfindet, wobei in der Anlage ein Prozessgas den Reaktor durchströmt und zumindest teilweise in den Reaktor zurückgeführt wird, wobei das Prozessgas vor der Rückführung in den Reaktor einen Schritt zur Reinigung in einer Vorrichtung zur katalytischen Verbrennung durchläuft,
dadurch gekennzeichnet, dass die Anlage um eine Einheit zur Herstellung des Gemisches aus rezykliertem Polyestermaterial und einem Polyester-Prepolymer aus einem Polyester-Herstellprozess erweitert wird, sowie zwischen dem Reaktor und der Vorrichtung zur katalytischen Verbrennung um folgende Prozessschritte erweitert wird :
- einen Schritt zum Kühlen des Prozessgases
- einen Schritt zur Adsorption von hochsiedenden organischen Komponenten in einem Schutzbett.

Die vorliegende Erfindung wird nachstehend anhand von nicht einschränkenden Beispielen und Zeichnungen näher erläutert. Es zeigen:
- Fig. 1: eine schematische Ansicht einer erfindungsgemässen Anlage gemäss einer ersten Ausführungsform
- Fig. 2: eine schematische Ansicht einer erfindungsgemässen Anlage gemäss einer zweiten Ausführungsform

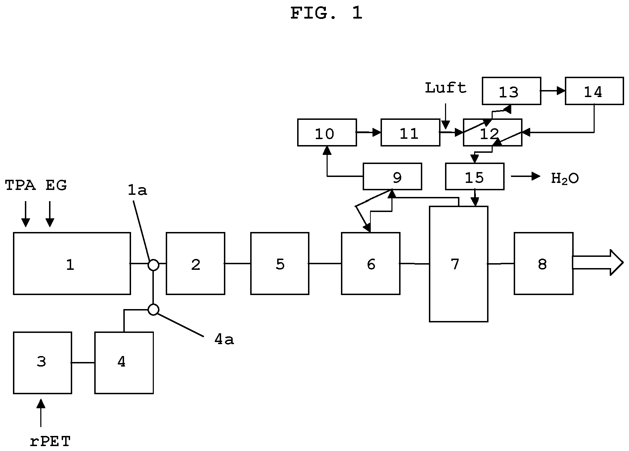

In Fig. 1 ist eine schematische Ansicht einer erfindungsgemässen Anlage gemäss einer ersten Ausführungsform gezeigt.

In einer Einheit 1 wird aus Terephthalsäure (TPA) und Ethylenglykol (EG) eine Aufschlämmung hergestellt und anschliessend einer Veresterung, Prepolymerisation und Schmelzpolykondensation in einem Finisher unterzogen. Eine Prepolymerschmelze aus "virgin" PET verlässt die Einheit 1 und gelangt zu einer Verbindungseinheit 1a, in welchem vorzugsweise ein Schmelzeventil angeordnet ist.

PET-Rezyklat (vorzugsweise PET-Flakes) werden in einen Extruder 3 eingeführt und dort aufgeschmolzen und extrudiert. Die Schmelze aus rPET wird in einem Schmelzefilter 4 eingeleitet und dort von Feststoffpartikeln gereinigt. Anschliessend wird die gereinigte rPET-Schmelze über eine Verbindungsleitung zur Verbindungseinheit 1a geführt und dort mit der Prepolymerschmelze aus "virgin" PET vereinigt. In der Verbindungsleitung für die rPET-Schmelze kann vorzugsweise ein Spülventil 4a angeordnet sein, um die Einleitung von kontaminierter oder qualitativ minderwertiger rPET-Schmelze zu verhindern und derartiges Material aus der Anlage herauszuleiten. Zudem kann in der Verbindungsleitung für die rPET-Schmelze mindestens eine Einheit zur Messung eines Qualitätsparameters angeordnet sein.

Das in der Verbindungseinheit 1a vereinigte Schmelzgemisch wird anschliessend in einem Granulator 2 (vorzugsweise einem Unterwassergranulator oder Unterwasserstranggranulator) granuliert, gegebenenfalls getrocknet und in einem Kristallisator 5 auf einen gewünschten Kristallisationsgrad gebracht. Das teilweise kristalline PET-Granulatgemisch wird in einem Vorerhitzer 6 auf die für die SSP-Reaktion erforderliche Temperatur erhitzt und in dem Reaktor 7 einer SSP-Reaktion unterzogen. Den Reaktor 7 verlässt das fertige PET-Gemisch mit der gewünschten intrinsischen Viskosiät und kann weiterverarbeitet werden.

Das Prozessgas wird aus dem Reaktor 7 durch einen Auslass herausgeleitet und zusammen mit dem Prozessgas aus dem Vorerhitzer 6 vermischt und durch einen Filter 9 geführt (um allfälligen vorhandenen PET-Staub abzutrennen). Anschliessend wird das Prozessgas in eine Rohrleitung 10 mit einem Kühlmantel geleitet und dort abgekühlt. Danach gelangt das Prozessgas in ein Schutzbett 11. Das Prozessgas wird danach mit Luft versetzt (um die Verbrennung der organischen Substanzen im Prozessgas zu ermöglichen, und anschliessend durch einen Wärmetauscher zur Wärmerückgewinnung (Economizer) 12 und danach durch einen Prozessgaserhitzer 13 geführt. Das Prozessgas gelangt in einen Katalysatorbehälter 14, das einen Schüttgutkatalysator mit Edelmetallbeschichtung (Platin und Palladium) enthält. Dort wird das Prozessgas katalytisch gereinigt. Zur Energierückgewinnung wieder das gereinigte Gas wieder durch den Economizer 12 geführt und weiter abgekühlt. Das Prozessgas wird in einem Trockner 15 (beispielsweise einem Molekularsiebtrockner) getrocknet. Danach wird ein Teil des Prozessgases wieder dem Reaktor 7 zugeführt, während weitere Teile des Prozessgases als Austauschgas dem Vorerhitzer 6 zugeführt werden.

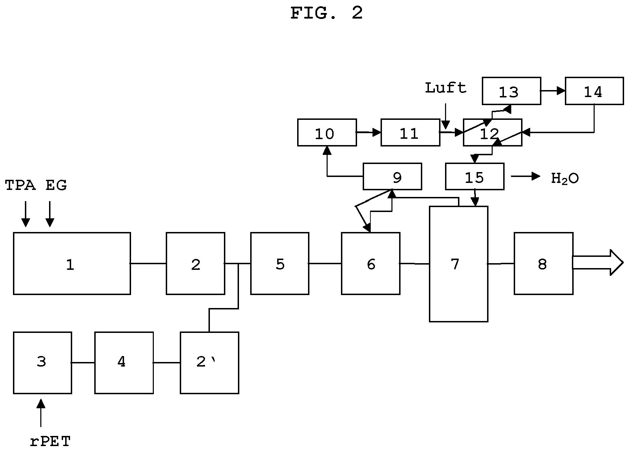

In Fig. 2 ist eine schematische Ansicht einer erfindungsgemässen Anlage gemäss einer zweiten Ausführungsform gezeigt. Gleiche Bezugszeichen bezeichnen dieselben Komponenten.

Die Anlage gemäss Fig. 2 unterscheidet sich von der Anlage gemäss Fig. 1 dahingehend, dass die den Schmelzefilter 4 verlassene rPET-Schmelze in einen Granulator 2' gelangt und mit dem virgin PET-Granulat aus dem Granulator 2 vereinigt wird. Die übrigen Schritte sind identisch.

### Vergleichsbeispiel 1

In einer konventionellen Anlage zur Herstellung eines Polyethylenterephthalates (PET) wurde aus Terephthalsäure (TPA) mit 2% Isophthalsäure als Comonomer und Ethylenglykol (EG) eine Aufschlämmung (Slurry) hergestellt. Diese Aufschlämmung wurde anschliessend den Schritten der Veresterung, Prepolymerisation, und Schmelzphasenpolymerisation in einem Finisher unterzogen.

Die erhaltene Prepolymerschmelze wurde durch eine Unterwasser-Stranggranulation zu zylinderförmigen, amorphen PET-Prepolymer-granulaten (Granulatgewicht ca. 18mg) verarbeitet. Die Granulate wurden von einer Festphasenbehandlung mit den Schritten Kristallisation in einem Wirbelbettapparat, Vorheizen auf SSP-Reaktionstemperatur unter Inertgas in einem Dächerwärmetauscher, Festphasenpolykondensation (SSP) unter Inertgas in einem Schachtreaktor und Kühlung in einem Fliessbettapparat unterzogen.

Die Anlage wurde mit einem Durchsatz von 6.66 t/h betrieben. Die intrinsische Viskosität des Prepolyesters vor der Unterwasser-Stranggranulation betrug 0.62 dl/g, und der Acetaldehydgehalt betrug 66 ppm.

Der Reaktor zur Durchführung der SSP-Reaktion wurde mit einem Inertgasstrom von 65 m³/min durchströmt. Das Inertgas bestand im Wesentlichen aus Stickstoff, wobei CO₂ sowie geringe Mengen an Wasserdampf, Sauerstoff und flüchtigen organischen Verbindungen aus dem PET-Herstellprozess (Ethylenglykol und Acetaldehyd) vorhanden waren.

Nach einer Behandlungszeit von 13 Stunden bei durchschnittlich 204°C betrug die intrinsische Viskosität des PET 0.82 dl/g.

Das Prozessgas aus dem Reaktor wurde durch einen Auslass aus dem Reaktor herausgeleitet, mit dem Prozessgas aus dem Vorerhitzer vermischt, durch einen Filter geführt (um allfälligen vorhandenen PET-Staub abzutrennen) und anschliessend einer weiteren Reinigungsstufe mittels katalytischer Verbrennung zugeführt. Das Prozessgas wies nach dem Filter eine Temperatur von ca 185°C auf.

Zur Reinigung wurde dem Prozessgas eine Menge an Luft zudosiert, die ausreichend war, um die Verbrennung der organischen Substanzen im Prozessgas zu ermöglichen. Anschliessend wurde das Prozessgas/Luft-Gemisch durch einen Wärmetauscher zur Wärmerückgewinnung (Economizer) und anschliessend durch einen Prozessgaserhitzer geführt und dabei auf 380°C aufgeheizt. Die eigentliche Verbrennung der organischen Substanzen erfolgte in einem Katalysatorbett, das einen Schüttgutkatalysator mit Edelmetallbeschichtung (Platin und Palladium) enthielt. Zur Energierückgewinnung wurde das gereinigte Gas wieder durch den Economizer geführt und weiter abgekühlt. Aufgrund der Verbrennung entstandenes und im Gas schon vorhandenes Wasser wurde anschliessend in einem Molekularsiebtrockner entfernt. Danach wurde ein Teil des Prozessgases wieder dem Reaktor zugeführt, während weitere Teile des Prozessgases als Austauschgas für andere Prozessschritte (Förderungen, Kristallisation, Vorerhitzer) verwendet wurden.

Das fertige PET wies einen L-Wert von 89.8, einen a*-Wert von -1.7 und einen b*-Wert von -2.5 auf. Der Acetaldehydgehalt wurde auf 0.5 ppm gesenkt.

### Beispiel 1

Für das Beispiel 1 wurde die Anlage aus dem Vergleichsbeispiel 1 derart modifiziert, dass zwischen dem Filter vor der Gasreinigung und dem Eintritt in den Economizer drei jeweils 5 m lange Stücke Rohrleitung mit 0.3 m Innendurchmesser und einem Kühlmantel sowie ein Schutzbett mit 9000 kg einer Schüttung aus Aluminiumoxid in einem Behälter mit 2.2 m Durchmesser installiert wurden. Die Aluminiumoxid-Schüttung wies ein Schüttgewicht von ca. 750 kg/m³ auf und beinhaltete eine basische Beschichtung, mit welcher Chlor gebunden werden kann. Die Schüttung wurde im Behälter auf einem Siebrost abgestützt und war ca. 3.2 m hoch. Zur Überwindung des auftretenden Druckabfalls wurde ein zusätzlicher Ventilator installiert.

Vergleichsbeispiel 1 wurde mit der modifizierten Anlage gemäss Beispiel 1 wiederholt. Allerdings wurde die Anlageleistung der Schmelzphasenpolymerisation auf 5.41 t/h reduziert. Die PET Prepolymergranulate wurden in einen Mischsilo geführt und dort mit 1.25 t/h eines PET-Rezyklatgranulats (rPET) vermischt. Das Rezyklatgranulat wurde aus post-consumer PET-Flakes (Flaschenmahlgut) mit einem Anteil an PVC (Polyvinylchlorid) im Bereich von 25 bis 50 ppm in einem Einwellenextruder mit Schmelzepumpe, anschliessender Schmelzefiltration und Unterwassergranulation mit anschliessender Direktkristallisation hergestellt. Die Siebfeinheit zur Schmelzefiltration betrug 40pm. Die Viskosität betrug des PET-Rezyklatgranulats betrug 0.66 dl/g, sein Limonengehalt 68 ppb, und sein Acetaldehydgehalt 4 ppm. Das Granulatgewicht der sphärischen Granulate des PET-Rezyklatgranulats betrug ca 20 mg.

Anschliessend wurde das Gemisch aus PET-Prepolymergranulat und PET-Rezyklatgranulat in der modifizierten Festphasenbehandlungsanlage behandelt.

Das Prozessgas aus dem SSP-Prozess wurde aus dem Reaktor für die SSP-Reaktion durch einen Auslass herausgeführt und in der vorstehend beschriebenen Rohrleitung mit Kühlmantel auf 150°C abgekühlt. Über das Schutzbett hatte sich ein Druckabfall von 55 mbar ergeben, der durch den Betrieb eines Ventilators ausgeglichen wurde.

Nach der Festphasenbehandlung konnte trotz der uneinheitlichen Granulatform ein homogenes Gemisch aus PET-Polymer und ca. 19% PET-Rezyklat entnommen werden. Das Gemisch wies einen IV-Wert von 0.82 dl/g, einen L-Wert von 87.2, einen a*-Wert von -1.6 und einen b*-Wert von -1.9 auf. Der Acetaldehydgehalt des Gemisches wurde auf 0.5 ppm und der Limonengehalt auf unter 1 ppb gesenkt.

Aus dem PET/rPET-Granulat nach Beispiel 1 wurden Preforms und anschliessend Flaschen hergestellt. Der Acetaldehydgehalt der Preform lag bei 6.5 ppm. Während sich die rPET/PET-Preforms farblich noch von reinen PET-Preforms unterscheiden liessen, konnte im Flaschenkörper kein Unterschied mehr erkannt werden.

## Patentansprüche

1. Verfahren zur Verarbeitung eines Gemisches aus rezykliertem Polyestermaterial und einem Polyester-Prepolymer aus einem Polyester-Herstellprozess, umfassend folgende Schritte:
- Vermischung eines rezyklierten Polyestermaterials mit einem Polyester-Prepolymer aus einem Polyester-Herstellprozess unter Herstellung eines Feststoffgemisches;
- Behandlung dieses Feststoffgemisches in einem Reaktor (7) zur thermischen Behandlung von Schüttgütern mit einem Prozessgas im Gegenstrom oder Kreuzstrom zur Flussrichtung des Gemisches;
- Einleitung des Prozessgases, das organische Verunreinigungen und optional eine Sauerstoffmenge enthält, welche geringer ist als zur vollständigen Verbrennung der organischen Verunreinigungen in diesem Verfahren erforderlich, in zumindest einen Wärmetauscher (13) zum Aufheizen des Prozessgases, und Aufheizen des Prozessgases in diesem Wärmetauscher (13),
- Geregelte Zufuhr eines sauerstoffhaltigen Gases in das Prozessgas,
- Einleitung des mit dem sauerstoffhaltigen Gas versetzten Prozessgases in einen Katalysatorbehälter (14) mit mindestens einem darin angeordnetem Katalysatorbett, welcher vom Prozessgas von einer Eintrittsseite zu einer Austrittsseite durchströmt wird,
- Verbrennung der organischen Verunreinigungen im Prozessgas in dem zumindest einen Katalysatorbett,
- Zumindest teilweise Rückführung des Prozessgases, vorzugsweise in den Reaktor (7) zur thermischen Behandlung von Schüttgütern,
**dadurch gekennzeichnet, dass** das Prozessgas vor Eintritt in den Katalysatorbehälter (14) durch ein vor dem Wärmetauscher (12) zum Aufheizen des Prozessgases angeordnetes Schutzbett (11) mit einem festen Adsorptionsmaterial geleitet wird, das hochsiedende organische Substanzen oder organische Substanzen mit hoher Verbrennungstemperatur aus dem Prozessgasstrom entfernt, wobei eine Temperatur im Bereich von 100 bis 250°C eingestellt wird, so dass die hochsiedenden Substanzen kondensieren und vom Adsorptionsmaterial aufgenommen werden können.

2. Verfahren nach Anspruch 1, **dadurch gekennzeichnet, dass** das Polyestermaterial ausgewählt ist aus der Gruppe bestehend aus Polyethylenterephthalat und seinen Copolymeren.

3. Verfahren nach Anspruch 1 oder 2, **dadurch gekennzeichnet, dass** das rezyklierte Polyestermaterial granuliert wird und die so erhalten Granulate aus rezykliertem Polyestermaterial mit einem Granulat aus Polyester-Prepolymer aus einem Polyester-Herstellprozess vermischt werden.

4. Verfahren nach Anspruch 1 oder 2, **dadurch gekennzeichnet, dass** das rezyklierte Polyestermaterial als Schmelze bereitgestellt, mit einer Schmelze aus Polyester-Prepolymer aus einem Polyester-Herstellprozess vermischt und das so erhaltene Schmelzegemisch anschliessend granuliert wird.

5. Verfahren nach einem der Ansprüche 2 bis 4, **dadurch gekennzeichnet, dass** das Prozessgas vor dem Eintritt in das Schutzbett auf eine Temperatur im Bereich von 120 - 170°C gekühlt wird.

6. Vorrichtung zur Verarbeitung eines Gemisches aus rezykliertem Polyestermaterial und einem Polyester-Prepolymer aus einem Polyester-Herstellprozess, umfassend
- eine Einheit zur Herstellung des Gemisches aus rezykliertem Polyestermaterial und einem Polyester-Prepolymer aus einem Polyester-Herstellprozess;
- einen Reaktor (7) zur thermischen Behandlung des Gemisches aus rezykliertem Polyestermaterial und einem Polyester-Prepolymer aus einem Polyester-Herstellprozess mit einem Prozessgas;
- zumindest ein Katalysatorbett, welches in einem Katalysatorbehälter (14) angeordnet ist, der eine Eintrittsseite und eine Austrittsseite für das Prozessgas aus dem Reaktor zur thermischen Behandlung des Gemisches aufweist;
- zumindest einen Wärmetauscher (13) zum Aufheizen des Prozessgases, welcher vor der Eintrittsseite des Katalysatorbehälters (14) angeordnet ist;
- vorzugsweise zumindest einen Wärmetauscher (12) zur Energierückgewinnung, welcher dem zumindest einem Wärmetauscher (13) zum Aufheizen des Prozessgases vorgeschaltet und gleichzeitig der Austrittsseite des Katalysatorbehälters (14) nachgeschaltet ist;
**dadurch gekennzeichnet, dass** vor dem Wärmetauscher (13) zum Aufheizen des Prozessgases und somit vor dem Katalysatorbett ein Schutzbett (11) mit einem festen Adsorptionsmaterial angeordnet ist, das bei einer Temperatur im Bereich von 100 bis 250°C hochsiedende organische Substanzen oder organische Substanzen mit hoher Verbrennungstemperatur aus dem Prozessgasstrom entfernen kann, indem die hochsiedenden Substanzen kondensieren und vom Adsorptionsmaterial aufgenommen werden können.

7. Vorrichtung nach Anspruch 6, **dadurch gekennzeichnet, dass** die Vorrichtung weiterhin umfasst:
- zumindest eine Verbindungsleitung, die eine Austrittsseite eines Reaktors (7) zur thermischen Behandlung von Schüttgütern mit einer Eintrittsseite des Katalysatorbehälters (14) verbindet;
- zumindest eine Verbindungsleitung, die eine Eintrittsseite des Reaktors (7) zur thermischen Behandlung von Schüttgütern mit einer Austrittsseite des Katalysatorbehälters (14) verbindet.

8. Vorrichtung nach Anspruch 6 oder 7, **dadurch gekennzeichnet, dass** es sich bei dem zumindest einen Wärmetauscher (12) zur Energierückgewinnung um einen Rohrbündelwärmetauscher handelt, dessen Rohrbündel vorzugsweise in einer Linie mit der Durchflussrichtung durch den zumindest einen Wärmetauscher (13) zum Erwärmen des Prozessgases und mit der Durchflussrichtung durch das Katalysatorbett ausgerichtet ist.

9. Vorrichtung nach einem der Ansprüche 6 bis 8, **dadurch gekennzeichnet, dass** zumindest eine Vorrichtung zur Zufuhr eines sauerstoffhaltigen Gases vor der Eintrittsseite des Katalysatorbehälters (14) angeordnet ist.

10. Vorrichtung nach Anspruch 9, **dadurch gekennzeichnet, dass** eine Vorrichtung zum Verteilen des sauerstoffhaltigen Gases im Prozessgas zwischen der Vorrichtung zur Zufuhr des sauerstoffhaltigen Gases und der Eintrittsseite des Katalysatorbehälters (14) angeordnet ist.

11. Vorrichtung nach einem der Ansprüche 6 bis 10, **dadurch gekennzeichnet, dass** die Einheit zur Herstellung des Gemisches eine Verbindungseinheit (1a) einer Schmelzeleitung für eine Schmelze aus rezykliertem Polyestermaterial mit einer Schmelzeleitung für eine Schmelze aus Polyester-Prepolymer aus einem Polyester-Herstellprozess ist.

12. Vorrichtung nach Anspruch 11, **dadurch gekennzeichnet, dass** in der Verbindungseinheit (1a) ein Schmelzeventil angeordnet ist.

13. Vorrichtung nach Anspruch 11 oder 12, **dadurch gekennzeichnet, dass** vor der Verbindungseinheit (1a) oder im Schmelzeventil zumindest ein Spülventil (4a) angeordnet ist.

14. Vorrichtung nach einem der Ansprüche 11 bis 13, **dadurch gekennzeichnet, dass** in der Schmelzeleitung für rezyklierte Polyesterschmelze eine Einheit zur Messung eines Qualitätsparameters angeordnet ist.

15. Verfahren zum Umbau einer Anlage zur thermischen Behandlung eines Schüttgut-Neumaterials, vorzugsweise zur Nachkondensation von Polyestergranulat-Neumaterial, zu einer Anlage zur thermischen Behandlung eines zumindest teilweise Rezyklat umfassenden Polyestergranulats, das zumindest teilweise regranuliertes Polyesterrezyklat umfasst,
wobei die thermische Behandlung, vorzugsweise die Nachkondensation, in fester Phase in einem Reaktor (7) stattfindet, welcher von einem Prozessgas durchströmt wird, wobei das aus dem Reaktor (7) austretende Prozessgas zumindest teilweise in den Reaktor (7) zurückgeführt wird und vor der Rückführung in den Reaktor (7) einen Schritt zur Reinigung in einer Vorrichtung (14) zur katalytischen Verbrennung durchläuft,
**dadurch gekennzeichnet, dass** die Anlage
- um eine Einheit (1a) zur Herstellung des Gemisches aus rezykliertem Polyestermaterial und einem Polyester-Prepolymer aus einem Polyester-Herstellprozess erweitert wird, sowie
zwischen dem Reaktor (7) und der Vorrichtung (14) zur katalytischen Verbrennung um folgende Prozessschritte erweitert wird:
- einen Schritt zum Kühlen des Prozessgases
- einen Schritt zur Adsorption von hochsiedenden organischen Komponenten in einem Schutzbett.

## Claims

1. A method for processing a mixture of recycled polyester material and a polyester prepolymer from a polyester manufacturing process, comprising the following steps:
- Blending of a recycled polyester material with a polyester prepolymer from a polyester manufacturing process to produce a mixture of solids;
- Treatment of this mixture of solids in a reactor (7) for thermal treatment of bulk materials with a process gas in counter-current or cross-current to the flow direction of the mixture;
- introducing the process gas containing organic impurities and optionally an amount of oxygen less than required to completely combust the organic impurities in said process into at least one heat exchanger (13) to heat the process gas, and heating the process gas in said heat exchanger (13),
- Controlled supply of an oxygen-containing gas to the process gas,
- Introduction of the process gas mixed with the oxygen-containing gas into a catalyst vessel (14) with at least one catalyst bed arranged therein, through which the process gas flows from an inlet side to an outlet side,
- Combustion of the organic impurities in the process gas in the at least one catalyst bed,
- At least partial recirculation of the process gas, preferably into the reactor (7) for thermal treatment of bulk materials,
**characterized in that**, before entering the catalyst vessel (14), the process gas is passed through a protective bed (11) containing a solid adsorbent material arranged upstream of the heat exchanger (12) for heating the process gas, which removes high-boiling organic substances or organic substances having a high combustion temperature from the process gas stream, a temperature in the range of 100 to 250°C being set so that the high-boiling substances can condense and be absorbed by the adsorbent material.

2. Method according to claim 1, **characterized in that** the polyester material is selected from the group consisting of polyethylene terephthalate and its copolymers.

3. Method according to claim 1 or 2, **characterized in that** the recycled polyester material is pelletized and the pellets of recycled polyester material thus obtained are mixed with pellets of polyester prepolymer from a polyester manufacturing process.

4. Method according to claim 1 or 2, **characterized in that** the recycled polyester material is provided as a melt, mixed with a melt of polyester prepolymer from a polyester manufacturing process, and the melt mixture thus obtained is subsequently pelletized.

5. Method according to any one of claims 2 to 4, **characterized in that** the process gas is cooled to a temperature in the range of 120-170°C before entering the protective bed.

6. Device for processing a mixture of recycled polyester material and a polyester prepolymer from a polyester manufacturing process, comprising
- a unit for producing the mixture of recycled polyester material and a polyester prepolymer from a polyester manufacturing process;
- a reactor (7) for thermal treatment of the mixture of recycled polyester material and a polyester prepolymer from a polyester manufacturing process with a process gas;
- at least one catalyst bed arranged in a catalyst vessel (14) having an inlet side and an outlet side for the process gas from the reactor for thermal treatment of the mixture;
- at least one heat exchanger (13) for heating the process gas, which is arranged upstream of the inlet side of the catalyst vessel (14);
- preferably at least one heat exchanger (12) for energy recovery, which is connected upstream of the at least one heat exchanger (13) for heating the process gas and at the same time downstream of the outlet side of the catalyst vessel (14);
**characterized in that** a protective bed (11) comprising a solid adsorbent material is arranged upstream of the heat exchanger (13) for heating the process gas and thus upstream of the catalyst bed, said protective bed being capable of removing from the process gas stream high-boiling organic substances or organic substances having a high combustion temperature at a temperature in the range of 100 to 250°C by allowing the high-boiling substances to condense and be absorbed by the adsorbent material.

7. Device according to claim 6, **characterized in that** the device further comprises:
- at least one connecting line which connects an outlet side of a reactor (7) for thermal treatment of bulk materials to an inlet side of the catalyst vessel (14);
- at least one connecting line connecting an inlet side of the reactor (7) for thermal treatment of bulk materials to an outlet side of the catalyst vessel (14).

8. Device according to claim 6 or 7, **characterized in that** the at least one heat exchanger (12) for energy recovery is a tube bundle heat exchanger, the tube bundle of which is preferably aligned with the flow direction through the at least one heat exchanger (13) for heating the process gas and with the flow direction through the catalyst bed.

9. Device according to any one of claims 6 to 8, **characterized in that** at least one device for supplying an oxygen-containing gas is arranged upstream of the inlet side of the catalyst container (14).

10. Device according to claim 9, **characterized in that** a device for distributing the oxygen-containing gas in the process gas is arranged between the device for supplying the oxygen-containing gas and the inlet side of the catalyst vessel (14).

11. Device according to any one of claims 6 to 10, **characterized in that** the unit for producing the mixture is a connecting unit (1a) of a melt line for a melt of recycled polyester material with a melt line for a melt of polyester prepolymer from a polyester manufacturing process.

12. Device according to claim 11, **characterized in that** a melt valve is arranged in the connection unit (1a).

13. Device according to claim 11 or 12, **characterized in that** at least one flush valve (4a) is arranged upstream of the connecting unit (1a) or in the melt valve.

14. Device according to any one of claims 11 to 13, **characterized in that** a unit for measuring a quality parameter is arranged in the melt line for recycled polyester melt.

15. Method for retrofitting a plant for thermal treatment of a bulk virgin material, preferably for post-condensation of pelletized polyester virgin material, into a plant for thermal treatment of a pelletized polyester comprising at least partly recycled material, which comprises at least partly repelletized polyester recycled material,
wherein the thermal treatment, preferably the post-condensation, takes place in solid phase in a reactor (7) through which a process gas flows, the process gas leaving the reactor (7) being at least partially recirculated into the reactor (7) and, before being recirculated into the reactor (7), passing through a purification step in a catalytic combustion device (14)
**characterized in that** the plant
- is enlarged by a unit (1a) for producing the mixture of recycled polyester material and a polyester prepolymer from a polyester production process, and
between the reactor (7) and the device (14) for catalytic combustion is enlarged by the following process steps:
- a step for cooling the process gas
- a step for adsorption of high boiling organic components in a protective bed.

## Revendications

1. Procédé de traitement d'un mélange de matériau polyester recyclé et d'un prépolymère polyester provenant d'un processus de fabrication de polyester, comprenant les étapes suivantes:
- Mélange d'un matériau polyester recyclé avec un prépolymère polyester provenant d'un processus de fabrication de polyester, pour produire un mélange de solides ;
- traitement de ce mélange de matières solides dans un réacteur (7) pour le traitement thermique de matières en vrac avec un gaz de traitement à contre-courant ou à courant croisé par rapport au sens d'écoulement du mélange ;
- l'introduction du gaz de traitement contenant des impuretés organiques et éventuellement une quantité d'oxygène inférieure à celle nécessaire pour la combustion complète des impuretés organiques dans ce procédé, dans au moins un échangeur de chaleur (13) pour chauffer le gaz de traitement, et le chauffage du gaz de traitement dans cet échangeur de chaleur (13),
- Alimentation régulée d'un gaz contenant de l'oxygène dans le gaz de traitement,
- introduction du gaz de traitement mélangé avec le gaz contenant de l'oxygène dans un récipient de catalyseur (14) avec au moins un lit de catalyseur disposé dans celui-ci, lequel est traversé par le gaz de traitement d'un côté d'entrée à un côté de sortie,
- la combustion des impuretés organiques dans le gaz de traitement dans ledit au moins un lit de catalyseur,
- Recyclage au moins partiel du gaz de traitement, de préférence dans le réacteur (7) pour le traitement thermique de produits en vrac,
**caractérisé en ce que** le gaz de traitement, avant d'entrer dans le récipient de catalyseur (14), est conduit à travers un lit de protection (11) disposé en amont de l'échangeur de chaleur (12) pour chauffer le gaz de traitement, avec un matériau adsorbant solide qui élimine du flux de gaz de traitement les substances organiques à point d'ébullition élevé ou les substances organiques à température de combustion élevée, une température dans la plage de 100 à 250°C étant réglée, de sorte que les substances à point d'ébullition élevé se condensent et peuvent être absorbées par le matériau adsorbant.

2. Procédé selon la revendication 1, **caractérisé en ce que** le matériau polyester est choisi dans le groupe constitué par le polyéthylène téréphtalate et ses copolymères.

3. Procédé selon la revendication 1 ou 2, **caractérisé en ce que** le matériau polyester recyclé est granulé et les granulés de matériau polyester recyclé ainsi obtenus sont mélangés avec des granulés de prépolymère polyester provenant d'un processus de fabrication de polyester.

4. Procédé selon la revendication 1 ou 2, **caractérisé en ce que** le matériau polyester recyclé est mis à disposition sous forme de masse fondue, mélangé avec une masse fondue de prépolymère polyester provenant d'un processus de fabrication de polyester et le mélange de masse fondue ainsi obtenu est ensuite granulé.

5. Procédé selon l'une quelconque des revendications 2 à 4, **caractérisé en ce que** le gaz de traitement est refroidi à une température comprise dans la plage de 120 à 170°C avant d'entrer dans le lit de protection.

6. Appareil pour le traitement d'un mélange de matériau polyester recyclé et d'un prépolymère polyester provenant d'un processus de fabrication de polyester, comprenant
- une unité de production du mélange de matériau polyester recyclé et d'un prépolymère polyester provenant d'un processus de fabrication de polyester ;
- un réacteur (7) pour le traitement thermique du mélange de matériau polyester recyclé et d'un prépolymère polyester provenant d'un processus de fabrication de polyester avec un gaz de traitement ;
- au moins un lit de catalyseur, qui est disposé dans un récipient de catalyseur (14), qui présente un côté d'entrée et un côté de sortie pour le gaz de traitement provenant du réacteur pour le traitement thermique du mélange ;
- au moins un échangeur de chaleur (13) pour le chauffage du gaz de traitement, qui est disposé devant le côté entrée du réservoir de catalyseur (14) ;
- de préférence au moins un échangeur de chaleur (12) pour la récupération d'énergie, qui est monté en amont de l'au moins un échangeur de chaleur (13) pour le chauffage du gaz de traitement et qui est en même temps monté en aval du côté de sortie du réservoir de catalyseur (14) ;
**caractérisé en ce qu'**en amont de l'échangeur de chaleur (13) pour chauffer le gaz de traitement et donc en amont du lit de catalyseur, un lit de protection (11) est disposé avec un matériau adsorbant solide qui peut éliminer du flux de gaz de traitement, à une température dans la plage de 100 à 250°C, des substances organiques à point d'ébullition élevé ou des substances organiques à température de combustion élevée, en condensant les substances à point d'ébullition élevé et en les laissant être absorbées par le matériau adsorbant.

7. Appareil selon la revendication 6, **caractérisé en ce que** l'appareil comprend en outre :
- au moins une conduite de liaison qui relie un côté de sortie d'un réacteur (7) pour le traitement thermique de produits en vrac à un côté d'entrée du réservoir de catalyseur (14) ;
- au moins une conduite de liaison qui relie un côté entrée du réacteur (7) pour le traitement thermique de produits en vrac à un côté sortie du récipient de catalyseur (14).

8. Appareil selon la revendication 6 ou 7, **caractérisé en ce que** ledit au moins un échangeur de chaleur (12) pour la récupération d'énergie est un échangeur de chaleur à faisceau tubulaire, dont le faisceau tubulaire est de préférence aligné avec la direction d'écoulement à travers ledit au moins un échangeur de chaleur (13) pour chauffer le gaz de traitement et avec la direction d'écoulement à travers le lit de catalyseur.

9. Appareil selon l'une quelconque des revendications 6 à 8, **caractérisé en ce qu'**au moins un dispositif d'apport d'un gaz contenant de l'oxygène est disposé en amont du côté entrée du réservoir de catalyseur (14).

10. Appareil selon la revendication 9, **caractérisé en ce qu'**un dispositif de distribution du gaz contenant de l'oxygène dans le gaz de traitement est disposé entre le dispositif d'alimentation en gaz contenant de l'oxygène et le côté entrée du réservoir de catalyseur (14).

11. Appareil selon l'une quelconque des revendications 6 à 10, **caractérisé en ce que** l'unité de production du mélange est une unité de raccordement (1a) d'une ligne de fusion pour une fusion de matériau polyester recyclé avec une ligne de fusion pour une fusion de prépolymère polyester provenant d'un processus de fabrication de polyester.

12. Appareil selon la revendication 11, **caractérisé en ce qu'**une soupape de fusion est disposée dans l'unité de liaison (1a).

13. Appareil selon la revendication 11 ou 12, **caractérisé en ce qu'**au moins une soupape de rinçage (4a) est disposée en amont de l'unité de liaison (1a) ou dans la soupape de fusion.

14. Appareil selon l'une quelconque des revendications 11 à 13, **caractérisé en ce qu'**une unité de mesure d'un paramètre de qualité est disposée dans la ligne de fusion de polyester fondu recyclé.

15. Procédé de transformation d'une installation de traitement thermique d'un matériau neuf en vrac, de préférence pour la post-condensation de matériau neuf en granulés de polyester, en une installation de traitement thermique de granulés de polyester comprenant au moins partiellement du recyclate, qui comprend au moins partiellement du recyclate de polyester regranulé,
le traitement thermique, de préférence la post-condensation, a lieu en phase solide dans un réacteur (7) qui est traversé par un gaz de traitement, le gaz de traitement sortant du réacteur (7) étant au moins partiellement recyclé dans le réacteur (7) et subissant, avant le recyclage dans le réacteur (7), une étape de purification dans un dispositif (14) de combustion catalytique,
**caractérisé en ce que** l'installation est étendu avec
- une unité (1a) pour la production du mélange de matériau polyester recyclé et d'un prépolymère polyester provenant d'un processus de production de polyester, ainsi que
entre le réacteur (7) et le dispositif (14) de combustion catalytique est étendu aux étapes de processus suivantes :
- une étape de refroidissement du gaz de traitement
- une étape d'adsorption de composants organiques à point d'ébullition élevé dans un lit de protection.
